# NEW EUROPEAN PATENT SPECIFICATION

(11) **EP 2 544 841 B2**
(45) Date of publication and mention of the opposition decision: **07.07.2021**
(45) Mention of the grant of the patent: 17.01.2018
(21) Application number: 11754128.4
(22) Date of filing: 11.03.2011
(51) Int. Cl.: B29C 55/14, B29C 55/16, B23B 3/26, B01D 67/00, C08G 69/00, H01M 2/14, H01M 2/16, H01M 2/34, H01M 10/0565, H01M 10/0525, B29L 31/00

(54) **BIAXIALLY ORIENTED POROUS MEMBRANES, COMPOSITES, AND METHODS OF MANUFACTURE AND USE**
BIAXIAL AUSGERICHTETE PORÖSE MEMBRANEN, VERBUNDSTOFFE UND VERFAHREN ZU IHRER HERSTELLUNG UND VERWENDUNG
MEMBRANES POREUSES À ORIENTATION BIAXIALE, COMPOSITES, ET PROCÉDÉS DE FABRICATION ET D'UTILISATION

(30) Priority: 12.03.2010 US 313152 P; 10.03.2011 US 201113044708
(43) Date of publication of application: 16.01.2013
(73) Proprietor: Celgard LLC, Charlotte, NC 28273 (US)
(72) Inventor: ZHANG, Xiaomin, Charlotte NC 28277 (US); RUMIERZ, Gerald, P., Fort Mill SC 29708 (US); HUMISTON, Karl, F., Fort Mill SC 29715 (US); HAIRE, Charles, E., Lancaster SC 29720 (US); FIELDS, Tyrone, S., Charlotte NC 28269 (US); BRASWELL, Michael, A., Charlotte NC 28203 (US); PROCTOR, Ronald, A., York SC 29745 (US)
(74) Representative: Tomkins & Co
(86) International application number: PCT/US2011/028019
(87) International publication number: WO 2011/112885

(56) References cited:
- EP-A2- 1 081 775
- WO-A2-02/051938
- WO-A2-2007/098339
- US-A1- 2007 196 638
- US-A1- 2008 118 827
- US-B2- 6 811 643

## Description

### Field of the Invention

The invention is directed to use of a porous membrane in humidity control, selective passage of humidity, and/or blockage of liquid water.

### Background of the Invention

Microporous polymer membranes are known, can be made by various processes, and the process by which the membrane is made may have a material impact upon the membrane's physical attributes. See, for example, Kesting, Robert E., Synthetic Polymeric Membranes, A Structural Perspective, Second Edition, John Wiley & Sons, New York, NY, (1985). US2007/0196638, now US8795565, discloses a microporous membrane is made by a dry-stretch process and has substantially round shaped pores and a ratio of machine direction tensile strength to transverse direction tensile strength in the range of 0.5 to 5.0. The method of making the foregoing microporous membrane includes the steps of: extruding a polymer into a nonporous precursor, and biaxially stretching the nonporous precursor, the biaxial stretching including a machine direction stretching and a transverse direction stretching, the transverse direction including a simultaneous controlled machine direction relax.

US6811643 discloses a method of making a microporous laminate sheet having a first film layer and a second layer. The first film layer includes a pore initiator and is bonded to the second layer in order to form a laminate sheet. The laminate sheet is then stretched using at least one CD intermeshing stretcher and at least one MDO stretching unit. Methods of making a microporous film as well as a microporous film laminate are also provided, along with an apparatus for stretching a film or laminate.

Three different known processes for making microporous polymer membranes include: the dry-stretch process (also known as the CELGARD process), the wet process, and the particle stretch process.

The dry-stretch process (the CELGARD process) refers to a process where pore formation results from stretching a nonporous, semicrystalline, extruded polymer precursor in the machine direction (MD stretch). See, for example, Kesting, Ibid. pages 290-297. Such a dry-stretch process is different from the wet process and the particle stretch process. Generally, in the wet process, also known as the phase inversion process, the extraction process, or the TIPS process, the polymeric raw material is mixed with a processing oil (sometimes referred to as a plasticizer), this mixture is extruded, and pores are then formed when the processing oil is removed (these films may be stretched before or after the removal of the oil). See, for example, Kesting, Ibid. pages 237-286.

Generally, in the particle stretch process, the polymeric raw material is mixed with particulate, this mixture is extruded, and pores are formed during stretching when the interfaces between the polymer and the particulate fracture due to the stretching forces. See, for example, U.S. Patent Nos. 6,057,061 and 6,080,507.

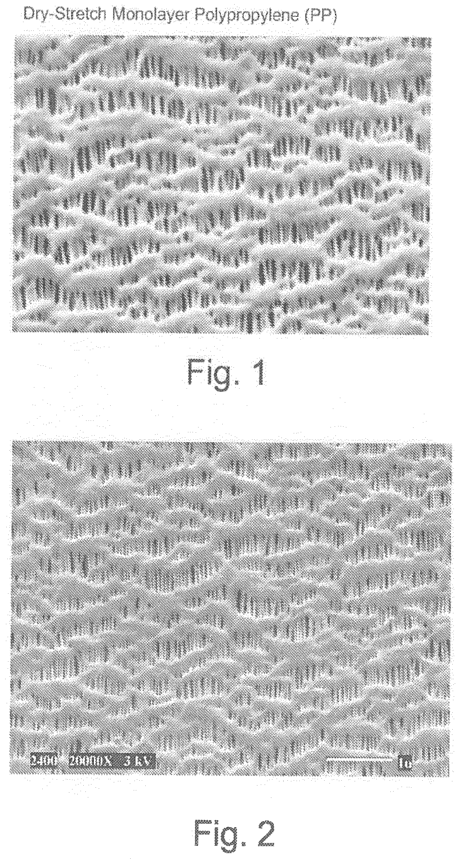

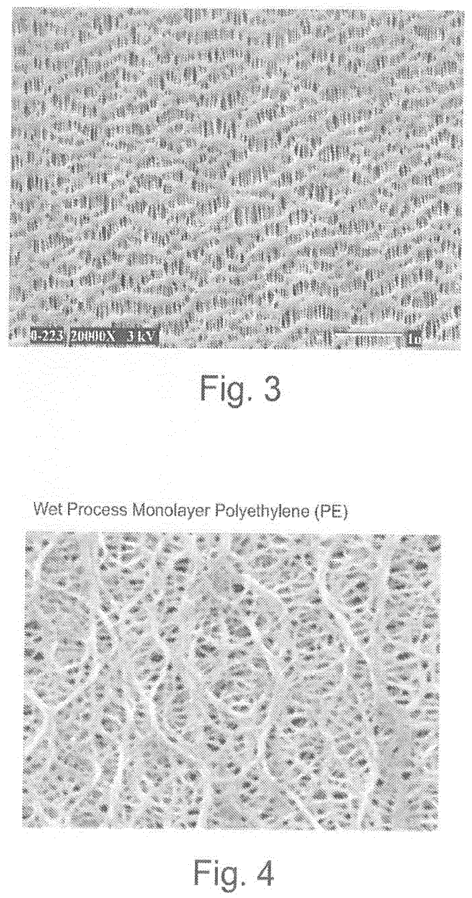

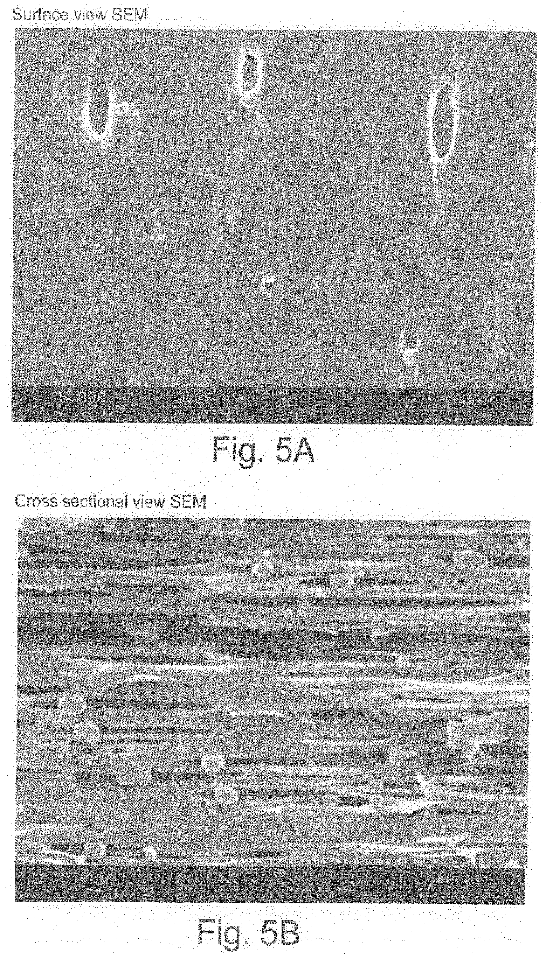

Moreover, the membranes arising from these different formation processes are usually physically different and the process by which each is made typically distinguishes one membrane from the other. For example, dry-stretch process membranes may have slit shaped pores due to the stretching of the precursor in the machine direction (the MD)(for example, see Figs. 1-3). Wet process membranes tend to have rounder pores and a lacelike appearance due to the oil or plasticizer and the stretching of the precursor in the machine direction (MD) and in the transverse machine direction or transverse direction (the TD)(for example, see Fig. 4). Particle stretch process membranes, on the other hand, may have oval shaped pores as the particulate and machine direction stretching (MD stretch) tend to form the pores (for example, see Fig. 5A). Accordingly, each membrane may be distinguished from the other by its method of manufacture.

While membranes made by the dry-stretch process have met with excellent commercial success, such as a variety of CELGARD® dry-stretch porous membranes sold by Celgard, LLC of Charlotte, North Carolina, including flat sheet membranes, battery separators, hollow fibers, and the like, there is a need to improve, modify or enhance at least selected physical attributes thereof, so that they may be used in a wider spectrum of applications, may perform better for particular purposes, or the like.

The use of air-filters to remove or reduce airborne contaminants such as dust, dust mites, molds, bacteria, dog dander, odors, and gases is generally known. Conventionally, air-filters include a filter medium formed from a bat, mat or sheet of porous material that is pleated and placed in a rectangular frame or support or folded into a corrugated oval or cylinder to provide a large filtration area in a relatively small volume.

While at least certain air filters have met with commercial success, there is a need for improved filtration media or filters so that they may be used in a wider spectrum of filtration or separation applications, may perform better for particular purposes, or the like.

The use of porous materials for the selective passage of gases and blockage of liquids is known. For example, LIQUI-CEL® hollow fiber membrane contactors, sold by Membrana-Charlotte a division of Celgard, LLC of Charlotte, North Carolina, are used for degassing or debubbling liquids. More particularly, LIQUI-CEL® membrane contactors are used extensively for deaeration of liquids in the microelectronics, pharmaceutical, power, food, beverage, industrial, photographic, ink, and analytical markets around the world.

The use of porous materials for filtration or separation processes is known. For example, various flat sheet membranes marketed or sold by Membrana GmbH of Wuppertal, Germany, or by Celgard, LLC and Daramic, LLC both of Charlotte, North Carolina, are used for filtration or separation processes. More particularly, such flat sheet membranes have been used to separate solid particles and liquids, gases from liquids, particles from gases, and the like.

While certain such porous materials for filtration or separation processes have met with commercial success, there is a need for improved porous materials so that they may be used in a wider spectrum of applications, may perform better for particular purposes, or the like.

The use of porous materials for the selective passage of humidity (moisture vapor) and blockage of liquid water, liquid desiccant, or other aqueous solutions may be known. In such liquid-desiccant systems, temperature and humidity may be controlled by a salt solution (or desiccant) which absorbs or emits water vapor.

The use of porous materials for the selective passage of water vapor (heat and moisture) and the blockage of gasses (exhaust and intake gases) may be known in connection with energy recovery ventilation (ERV) wherein heat and humidity are exchanged between make-up and exhaust air in a ventilation system.

The use of porous materials for the selective passage of pure or fresh water and blockage of salt or salt water is also known in connection with reverse osmosis desalination wherein a porous material, such as a reverse osmosis filter (RO filter) which allows pure water (fresh water) to pass there through but which restrains salt. With the salt water at a high pressure, fresh water is forced through the porous material and forms the fresh water stream.

The use of porous materials for the selective passage of water vapor or humidity (moisture vapor) and blockage of liquid salt water may also be known in connection with steam desalination wherein a porous material, such as a high charge density membrane may hold back salt water but pass salt-free water vapor to separate salt water and fresh water. With the salt water at a high temperature, fresh water vapor emits from the salt water, may migrate through the porous material, and condense to form a fresh water stream.

The use of porous materials for the selective passage of gases or humidity (moisture vapor) and blockage of liquids such as water may be known in connection with fuel cells such as hydrogen fuel cells having a proton exchange membrane (PEM) that must stay continually humidified. Waste water in the form of humid vapor may pass through a porous material and may be collected in a waste water holding compartment or discharged.

While possibly certain such porous materials for the selective passage of gases or humidity (moisture vapor) and blockage of liquid water or salt water may have met with limited commercial success, such as RO membranes sold by Dow Chemical, or expanded polytetrafluoroethylene (ePTFE) membranes sold by W.L. Gore, BHA, and others, there is a need for improved porous materials so that they may be used in a wider spectrum of applications, may perform better for particular purposes, or the like.

### Summary of the Invention

The present invention provides a use of a porous membrane in humidity control, selective passage of humidity, and/or blockage of liquid water.

Areas of improvement may include pore shapes other than slits, round shaped pores, increased transverse direction tensile strength, a balance of MD and TD physical properties, high performance related to, for example, moisture transport and hydrohead pressure, reduced Gurley, high porosity with balanced physical properties, uniformity of pore structure including pore size and pore size distribution, enhanced durability, composites of such membranes with other porous materials, composites or laminates of such membranes, films or layers with porous nonwovens, coated membranes, coextruded membranes, laminated membranes, membranes having desired moisture transport (or moisture vapor transport), hydrohead performance, and physical strength properties, usefulness in more physically abusive environments without loss of desirable membrane features, combination of membrane moisture transport performance combined with the macro physical properties, being hydrophobic, highly permeable, chemically and mechanically stable, having high tensile strength, combinations thereof, and/or the like.

While certain membranes made by the dry-stretch process have met with excellent commercial success, there is a need to improve, modify or enhance at least selected physical attributes thereof, so that they may be used in a wider spectrum of applications, perform better for particular purposes, and/or the like. In accordance with at least selected embodiments of membranes for use of the present invention, some areas of improvement may include pore shapes other than slits, round shaped pores, increased transverse direction tensile strength, a balance of MD and TD physical properties, uniformity of pore structure including pore size and pore size distribution, high performance related to, for example, moisture transport (or moisture vapor transport) and hydrohead pressure, reduced Gurley, high porosity with balanced physical properties, enhanced durability, composites of such membranes with other porous materials, composites or laminates of such membranes with porous nonwovens, coated membranes, coextruded membranes, laminated membranes, membranes having desired moisture transport, hydrohead performance, and physical strength properties, useful in more physically abusive environments without loss of desirable membrane features, combination of the membrane moisture transport performance combined with the macro physical properties, combinations thereof, and/or the like.

The porous membrane for use in the present invention is a dry-stretch process, porous membrane, film, layer, or composite that is hydrophobic, highly permeable, chemically and mechanically stable, has high tensile strength, and combinations thereof. These properties appear to make it an ideal membrane or film for the following applications, each of which involve the selective passage of moisture vapor (or other gases) and blockage of liquid water:
1. HVAC:
   a. Liquid-desiccant (LD) air conditioning (temperature and humidity control)
   b. Water-based air conditioning (temperature and humidity control)
   c. Energy recovery ventilation (ERV)
2. Desalination: Steam desalination applications
3. Fuel cells: Humidification unit
The unique pore structure of at least selected embodiments of the present invention may provide embodiments, materials or membranes that have certain specific benefits, such as the benefits of durability, high efficiency, narrow pore size distribution, and uniform flow rate.

In accordance with at least selected porous material or porous membrane embodiments for use in the present invention, at least a selected porous single or multi-layer polymer membrane has excellent balance of MD and TD physical properties while also being a high performance membrane as measured by the moisture transport and hydrohead performance. This membrane may also have high porosity (>60%) but still maintain the balanced physical properties when compared to more traditional membranes. Also, this membrane or film can be produced in union with or laminated to a porous support material or layer such as a nonwoven material on one or both sides thereof. The resultant composite, membrane or product may preferably retain the excellent moisture transport and even more improved hydrohead performance. Also, this resultant composite product may have physical strength properties that far exceed comparative membranes. Therefore, this new resultant composite product may have the added advantage of being useful in more physically abusive environments without a loss of the highly desirable membrane features. It is believed that these selected membrane and composite products are unique in their combination of membrane moisture transport performance combined with their macro physical properties. For example, prior membranes may have had porosity but not sufficient hydrohead pressure or performance, other membranes were too fragile, other membranes were strong but lacked other properties, or the like, while at least selected embodiments of the present invention may have, for example, desired porosity, moisture transport, hydrohead pressure, strength, and the like.

In accordance with at least selected porous membrane embodiments for use in the present invention, at least a selected porous mono-layer polyolefin (PO) such as polypropylene or polyethylene (monolayer PP or PE) membrane has excellent balance of MD and TD physical properties while also being a high performance membrane as measured by the moisture transport and hydrohead performance. This monolayer PO membrane may also have high porosity (>60%) but still maintain the balanced physical properties when compared to more traditional membranes. Also, this monolayer PO membrane or film can be produced in union with or laminated to a porous support or material such as polypropylene (PP) nonwoven material (nonwoven PP) on one or both sides thereof. The resultant composite, membrane or product may preferably retain the excellent moisture transport and even more improved hydrohead performance. Also, this resultant composite product may have physical strength properties that far exceed comparative membranes. Therefore, this new resultant composite product may have the added advantage of being useful in more physically abusive environments without a loss of the highly desirable membrane features. It is believed that these selected monolayer PP membrane and composite products are unique in their combination of membrane moisture transport performance combined with their macro physical properties. For example, prior membranes may have had porosity but not sufficient hydrohead pressure or performance, other membranes were too fragile, other membranes were strong but lacked other properties, or the like, while at least selected embodiments of the present invention may have, for example, desired porosity, moisture transport, hydrohead pressure, strength, and the like.

In accordance with at least selected porous material or porous membrane embodiments for use in the present invention, at least a selected porous multi-layer polyolefin (PO) such as polypropylene and/or polyethylene (multilayer PP and/or PE) membrane has excellent balance of MD and TD physical properties while also being a high performance membrane as measured by the moisture transport and hydrohead performance. This selected multilayer PO membrane may also have high porosity (>60%) but still maintain the balanced physical properties when compared to more traditional membranes. Also, this selected multilayer PO membrane or film can be produced in union with or laminated to a porous support or material such as polypropylene (PP) nonwoven material (nonwoven PP) on one or both sides thereof. The resultant composite, membrane or product may preferably retain the excellent moisture transport and even more improved hydrohead performance, may have physical strength properties that far exceed comparative membranes, may have the added advantage of being useful in more physically abusive environments without a loss of the highly desirable membrane features, may have a unique combination of membrane moisture transport performance combined with macro physical properties, and may have, for example, desired porosity, moisture transport, hydrohead pressure, strength, and the like.

In accordance with at least selected porous material or porous membrane embodiments for use in the present invention, at least a selected porous monolayer polymer membrane, for example, a monolayer (may have one or more plies) polyolefin (PO) membrane, such as a polypropylene (PP) and/or polyethylene (PE) (including PE, PP, or PE + PP blends) monolayer membrane, has excellent balance of MD and TD physical properties while also being a high performance membrane as measured by the moisture transport (or moisture vapor transport) and hydrohead performance. This selected monolayer polymer membrane may also have high porosity (>60%) but still maintain the balanced physical properties when compared to more traditional membranes. Also, this selected monolayer polymer membrane or film can be produced in union with or laminated to a porous nonwoven material, such as a nonwoven polymer material, for example, a PO nonwoven material (such as a porous polyethylene (PE) nonwoven material (nonwoven PE) and/or porous polypropylene (PP) nonwoven material (nonwoven PP) (including PE, PP, or PE + PP blends)) on one or both sides thereof. The resultant composite, membrane or product may preferably retain the excellent moisture transport (or moisture vapor transport) and even more improved hydrohead performance. Also, this resultant composite product may have physical strength properties that far exceed comparative membranes. Therefore, this new resultant composite product may have the added advantage of being useful in more physically abusive environments without a loss of the highly desirable membrane features. It is believed that these selected monolayer polymer membrane and composite products are unique in their combination of membrane moisture transport performance combined with their macro physical properties. These materials or membranes may have, for example, desired porosity, moisture transport, moisture vapor transport, hydrohead pressure, strength, and the like.

In accordance with at least selected porous material or porous membrane embodiments for use in the present invention, at least a selected porous multi-layer polymer membrane, for example, a multi-layer (two or more layer) polyolefin (PO) membrane, such as a polypropylene (PP) and/or polyethylene (PE) (including PE, PP, or PE + PP blends) multilayer membrane, has excellent balance of MD and TD physical properties while also being a high performance membrane as measured by the moisture transport (or moisture vapor transport) and hydrohead performance. This selected multilayer polymer membrane may also have high porosity (>60%) but still maintain the balanced physical properties when compared to more traditional membranes. Also, this selected multilayer polymer membrane or film can be produced in union with or laminated to a porous support or material such as PO nonwoven material (such as a porous polyethylene (PE) nonwoven material (nonwoven PE) and/or porous polypropylene (PP) nonwoven material (nonwoven PP)) on one or both sides thereof. The resultant composite, membrane or product may preferably retain the excellent moisture transport and even more improved hydrohead performance. Also, this resultant composite product may have physical strength properties that far exceed comparative membranes. Therefore, this new resultant composite product may have the added advantage of being useful in more physically abusive environments without a loss of the highly desirable membrane features. It is believed that these selected multilayer polymer membrane and composite products are unique in their combination of membrane moisture transport performance combined with their macro physical properties. The materials and membranes may have, for example, desired porosity, moisture transport, hydrohead pressure, strength, and the like.

In accordance with at least selected porous materials or porous membranes embodiments for use in the present invention, the pores (openings) have the following pore aspect ratios (based on physical dimensions of the pore opening in the machine direction (MD)(length), and transverse machine direction (TD)(width) by measuring, for example, one or more of the pores (preferably several of the pores to ascertain an average) in SEMs of the surface, top or front (A side) of selected membranes or composites, for example, mono-layer, bi-layer or tri-layer membranes:
Typical:
   MD/TD aspect ratio in range of 0.75 to 1.50
Preferred:
   MD/TD aspect ratio in range of 0.75 to 1.25
Most Preferred:
   MD/TD aspect ratio in range of 0.85 to 1.25

In accordance with at least selected porous materials or porous membranes embodiments for use in the present invention, if the MD/TD pore aspect ratio were 1.0, then a three-dimensional or 3D pore sphericity factor or ratio (MD/TD/ND) range could be: 0.25 to 8.0 or more; possibly preferred 1.0 to 2.5; and, most possibly preferred 1.0 to 2.0 or less (based on physical dimensions of the pore openings in the machine direction (MD)(length), transverse machine direction (TD)(width) and thickness direction or cross section (ND)(thickness); for example, measuring the MD and TD of one or more pores (preferably several pores to ascertain an average) in SEMs of the surface, top or front (A side), or the surface, bottom or back (B side), and measuring the ND of one or more pores (preferably several pores to ascertain an average) in SEMs of the cross-section, depth, or height (C side)(either length or width cross-section or both)(the ND dimension may be of a different pore than the MD and TD dimension as it may be difficult to measure the ND, MD and TD dimension of the same pore).

In accordance with at least selected porous materials or porous membranes embodiments for use in the present invention, the pores (openings) have the following pore aspect ratios (based on physical dimensions of the pore opening in the machine direction (MD)(length), and transverse machine direction (TD)(width) based on measuring the pores in SEMs of the top or front (A side) of selected mono-layer and tri-layer membranes:
Typical numbers for aspect ratio range of Machine direction MD (length) and Transverse direction TD (width):
MD/TD aspect ratio in range of 0.75 to 1.50

In accordance with at least selected porous materials or porous membranes embodiments for use in the present invention, the pores (openings) have the following three dimensional or 3D pore sphericity factors or ratios (based on physical dimensions of the pore openings in the machine direction (MD)(length), transverse machine direction (TD)(width) and thickness direction or cross section (ND)(thickness); for example, measuring one or more pores (preferably several pores to ascertain an average) in SEMs of the surface, top or front (A side), the surface, bottom or back (B side), and the cross-section, depth, or height (C side)(either length or width cross-section or both)(the ND dimension may be of a different pore than the MD and TD dimension as it may be difficult to measure the ND, MD and TD dimension of the same pore) of selected membranes, layers or composites, for example, of selected mono-layer and tri-layer membranes:
For example:
   Typical:
      MD/TD aspect ratio in range of 0.75 to 1.50
      MD/ND dimension ratio in range of 0.50 to 7.50
      TD/ND dimension ratio in range of 0.50 to 5.00
   Preferred:
      MD/TD aspect ratio in range of 0.75 to 1.25
      MD/ND dimension ratio in range of 1.0 to 2.5
      TD/ND dimension ratio in range of 1.0 to 2.5
   Most Preferred:
      MD/TD aspect ratio in range of 0.85 to 1.25
      MD/ND dimension ratio in range of 1.0 to 2.0
      TD/ND dimension ratio in range of 1.0 to 2.0

In accordance with at least selected porous materials or porous membranes embodiments for use in the present invention, the pores (openings) have the following pore sphericity factors or ratios (based on physical dimensions of the pore opening in the machine direction (MD)(length), transverse machine direction (TD)(width) and thickness direction or cross section (ND)(thickness) based on measuring the pores in SEMs of the top or front (A side) and the length and with cross-sections (C side) of selected mono-layer and tri-layer membranes:
Typical numbers for sphericity factor or ratio range of Machine
   direction MD (length), Transverse direction TD (width), and
Thickness direction ND (vertical height):
   MD/TD aspect ratio in range of 0.75 to 1.50
   MD/ND dimension ratio in range of 0.50 to 7.50
   TD/ND dimension ratio in range of 0.50 to 5.00.

In accordance with the present invention, a microporous membrane for use in humidity control, selective passage of humidity, and/or blockage of liquid water is made by a dry-stretch process and has substantially round shaped pores and a ratio of machine direction tensile strength to transverse direction tensile strength in the range of 0.5 to 5.0. The method of making the foregoing microporous membrane includes the steps of: extruding a polymer into a nonporous precursor, and biaxially stretching the nonporous precursor, the biaxial stretching including a machine direction stretching and a transverse direction stretching, the transverse direction stretching including a simultaneous controlled machine direction relax.

In accordance with at least selected embodiments of the present invention, a porous membrane in humidity control, selective passage of humidity, and/or blockage of liquid water is made by a modified dry-stretch process and has substantially round shaped pores, a ratio of machine direction tensile strength to transverse direction tensile strength in the range of 0.5 to 5.0, and has low Gurley as compared to prior dry-stretch membranes, has larger and more uniform mean flow pore diameters as compared to prior dry-stretch membranes, or both low Gurley and larger and more uniform mean flow pore diameters.

While certain membranes made by the conventional dry-stretch process have met with excellent commercial success, there is provided improved, modified or enhanced at least selected physical attributes thereof, so that they may be used in a wider spectrum of applications, may perform better for particular purposes, and/or the like.

While at least certain air filters have met with commercial success, there is disclosed herein improved, modified or enhanced filtration media so that they may be used in a wider spectrum of filtration or separation applications, may perform better for particular purposes, and/or the like.

While at least certain flat sheet porous materials for filtration or separation processes have met with commercial success there is disclosed herein improved, modified or enhanced porous materials so that they may be used in a wider spectrum of applications, may perform better for particular purposes, and/or the like.

While certain porous materials for the selective passage of gases or humidity (moisture vapor) and blockage of liquid water or salt water may have met with commercial success, such as RO membranes sold by Dow Chemical, ePTFE membranes sold by W.L. Gore, BHA, and others, there is dislcosed improved, modified or enhanced porous materials so that they may be used in a wider spectrum of applications, may perform better for particular purposes, and/or the like.

In accordance with at least selected embodiments of the present invention, an air-filter cartridge includes at least one pleated porous membrane such as a microporous membrane.

### Description of the Drawings

For the purpose of illustrating the various aspects or embodiments of the invention, there is shown in the drawings a form that is presently exemplary; it being understood, however, that the invention is not limited to the embodiments, precise arrangements or instrumentalities shown.
Figure 1 is a photograph (SEM surface photomicrograph) of a CELGARD® monolayer, conventional dry-stretch, polypropylene, battery separator.
Figure 2 is a photograph of a prior art dry-stretched membrane (single ply membrane).
Figure 3 is a photograph of a prior art dry-stretched membrane (multi-ply membrane, plies laminated then stretched).
Figure 4 is a photograph (SEM surface photomicrograph) of a CELGARD® monolayer, wet process, polyethylene battery separator.
Figure 5A is a photograph (SEM surface photomicrograph) of a particle stretch membrane. Figure 5B is a photograph (SEM cross-section photomicrograph) of a particle stretch membrane.
Figure 6 is a photograph (SEM surface photomicrograph) of a membrane (single ply membrane, biaxially oriented process).
Figure 7 is a photograph (SEM surface photomicrograph) of a membrane (multi-ply membrane, plies laminated together then stretched, biaxially oriented process).
Figure 8 is a photograph (SEM surface photomicrograph) of a membrane (multi-ply membrane, plies coextruded then stretched, biaxially oriented process).

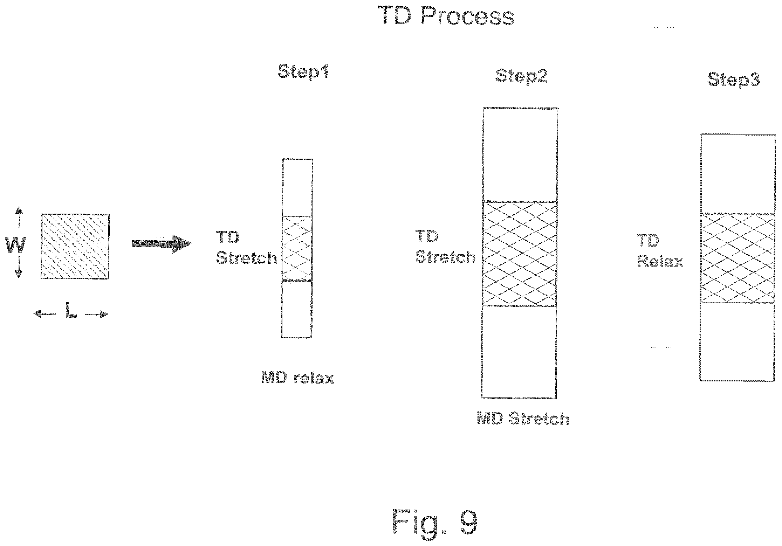

Figure 9 is a schematic representation of exemplary TD stretch processes in accordance with at least one embodiment of the biaxially oriented membrane manufacturing method of the present invention.

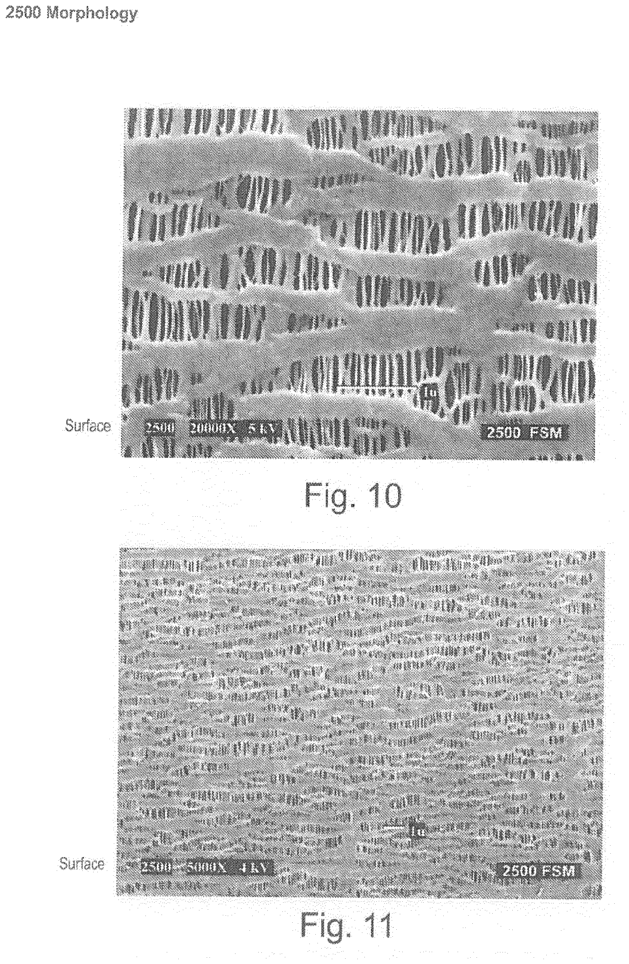

Figure 10 is a photograph (SEM surface photomicrograph) of a conventional CELGARD® 2500 membrane (PP monolayer, dry-stretch process) at 20,000X magnification.
Figure 11 is a photograph (SEM surface photomicrograph) of the membrane of Figure 10 at 5,000X magnification.

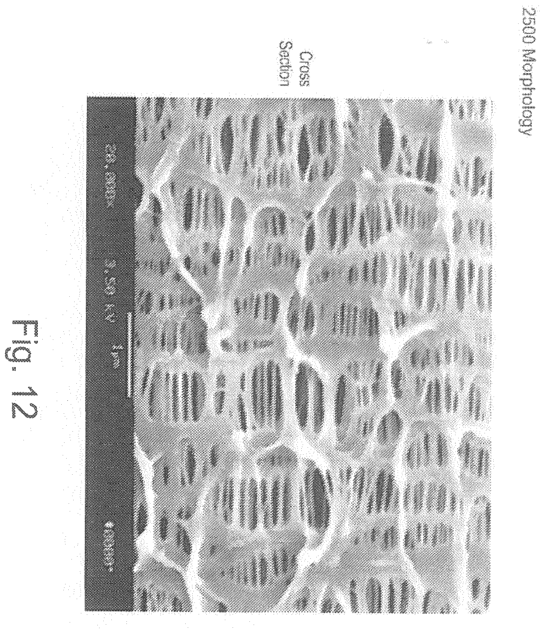

Figure 12 is a photograph (SEM cross section photomicrograph) of the membrane of Figures 10 and 11 at 20,000X magnification.
Figures 13 and 14 are respective photographs (SEM surface A (top) photomicrographs at 20,000X and 5,000X magnification) of a membrane Sample B in accordance with another membrane (PP monolayer, collapsed bubble, biaxially oriented process).
Figures 15 and 16 are respective photographs (SEM surface B (bottom) photomicrographs at 20,000X and 5,000X magnification) of the membrane Sample B of Figures 13 and 14.
Figures 17 and 18 are respective photographs (SEM cross section photomicrographs at 20,000X and 5,000X magnification) of the membrane Sample B of Figures 13 to 16.
Figures 19, 20 and 21 are respective photographs (SEM surface A (top) photomicrographs at 20,000X, 5,000X and 1,000X magnification) of a membrane Sample C in accordance with still another membrane or composite (PP monolayer [of Sample B] / nonwoven PP, laminated [heat + pressure]).
Figures 22, 23 and 24 are respective photographs (SEM surface B (bottom) photomicrographs at 20,000X, 5,000X and 1,000X magnification) of the membrane Sample C of Figures 19 to 21.

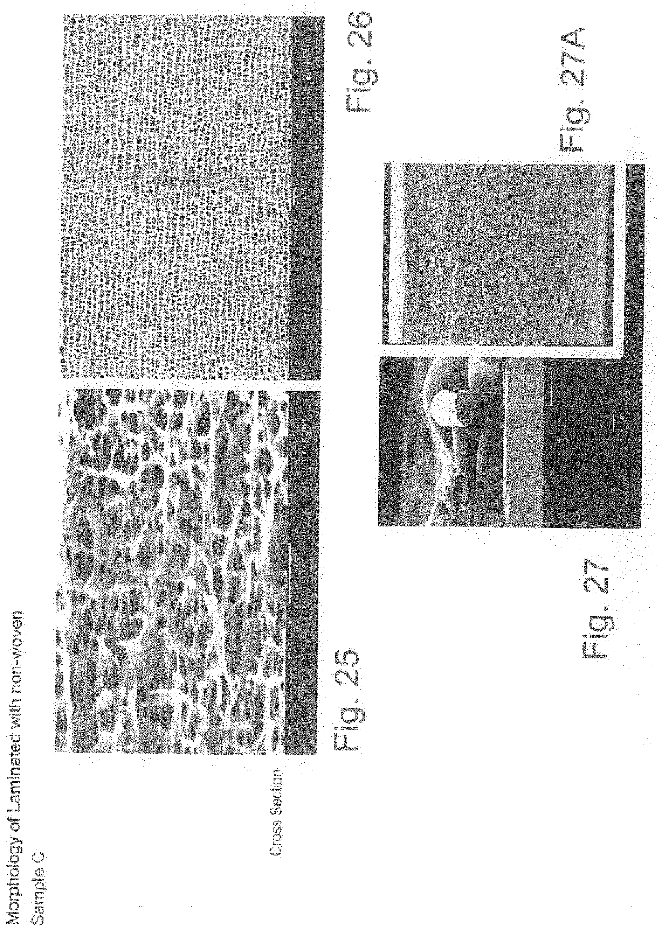

Figures 25 and 26 are respective photographs (SEM cross section photomicrographs at 20,000X and 5,000X magnification) of the membrane Sample C of Figures 19 to 24.
Figure 27 is a photograph (SEM cross section photomicrograph at 615X magnification) of the membrane Sample C of Figures 19 to 26 with the nonwoven PP layer on top (inverted).
Figure 27A is a photograph (SEM cross section photomicrograph at 3,420X magnification) of a portion of the monolayer PP layer of the membrane Sample C of Figure 27 (note the rectangle in Figure 27).
Figures 28 and 29 are respective photographs (SEM surface A (top) photomicrographs at 20,000X and 5,000X magnification) of a membrane Sample A in accordance with yet another membrane (monolayer PP, non-collapse bubble, biaxially oriented process).
Figures 30 and 31 are respective photographs (SEM surface B (bottom) photomicrographs at 20,000X and 5,000X magnification) of the membrane Sample A of Figures 28 and 29.
Figures 32, 33 and 34 are respective photographs (SEM surface A (top) photomicrographs at 20,000X, 5,000X and 1,000X magnification) of a membrane or composite Sample G (PP monolayer, non-collapse bubble, biaxially oriented process [of Sample A] / nonwoven PP, laminated [heat + pressure]).
Figures 35, 36 and 37 are respective photographs (SEM surface B (bottom) photomicrographs at 20,000X, 5,000X and 1,000X magnification) of the membrane Sample G of Figures 32 to 34.

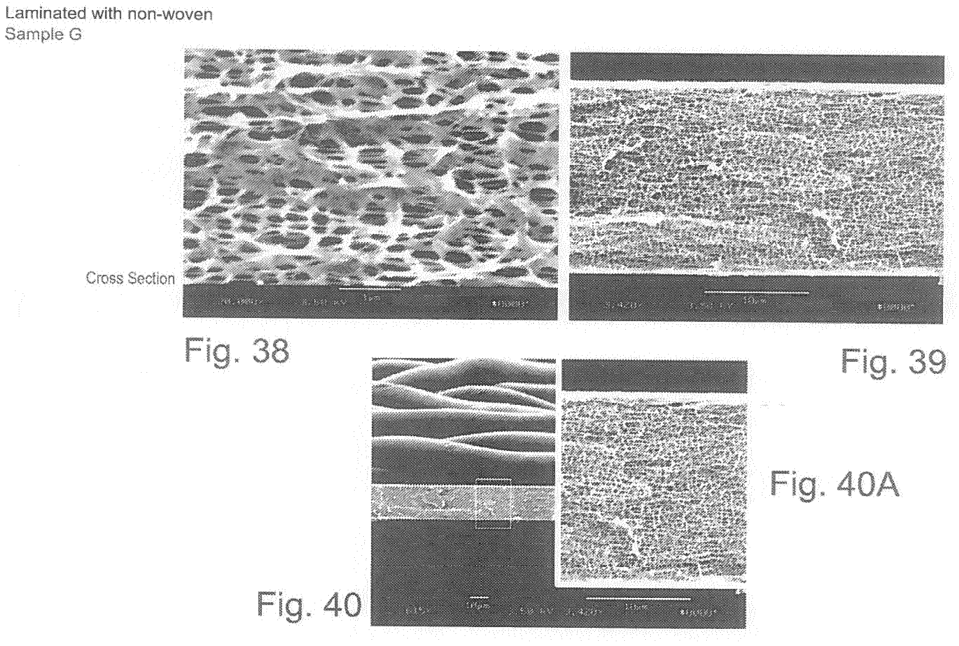

Figures 38 and 39 are respective photographs (SEM cross section photomicrographs at 20,000X and 3,420X magnification) of the membrane Sample G of Figures 32 to 37.
Figure 40 is a photograph (SEM cross section photomicrograph at 615X magnification) of the membrane Sample G of Figures 32 to 39 with the nonwoven PP layer on top (inverted).
Figure 40A is a photograph (SEM cross section photomicrograph at 3,420X magnification) of a portion of the monolayer PP layer of the membrane Sample G of Figure 40 (note the rectangle in Figure 40).
Figures 41 and 42 are respective photographs (SEM surface A (top) photomicrographs at 20,000X and 5,000X magnification) of a membrane Sample E in accordance with still another membrane embodiment of the instant invention (PP monolayer, collapsed bubble, biaxially oriented process).
Figures 43 and 44 are respective photographs (SEM surface B (bottom) photomicrographs at 20,000X and 5,000X magnification) of the membrane Sample E of Figures 41 and 42.
Figures 45 and 46 are respective photographs (SEM cross section photomicrographs at 20,000X and 5,000X magnification) of the membrane Sample E of Figures 41 to 44.
Figures 47 and 48 are respective photographs (SEM surface A (top) photomicrographs at 20,000X and 5,000X magnification) of a membrane Sample F (monolayer PP, non-collapse bubble, biaxially oriented process).
Figures 49 and 50 are respective photographs (SEM surface B (bottom) photomicrographs at 20,000X and 5,000X magnification) of the membrane Sample F of Figures 47 and 48.
Figures 51 and 52 are respective photographs (SEM surface A (top) photomicrographs at 20,000X and 5,000X magnification) of a membrane Sample D (coextruded PP/PE/PP tri-layer, collapsed bubble, biaxially oriented process).
Figures 53 and 54 are respective photographs (SEM surface B (bottom) photomicrographs at 20,000X and 5,000X magnification) of the membrane Sample D of Figures 51 and 52.

### Description of the Invention

A microporous membrane for use in humidity control, selective passage of humidity, and/or blockage of liquid water is made by a preferred modified dry-stretch process (biaxially oriented process) and has substantially round shaped pores and a ratio of machine direction tensile strength to transverse direction tensile strength in the range of 0.5 to 5.0, preferably 0.5 to 4.0. A porous membrane such as a microporous membrane is a thin, pliable, polymeric sheet, foil, or film having a plurality of pores therethrough. Such membranes may be single or multiple plies, single or multiple layers, composites, laminates, or the like and may be used in a wide variety of applications, including, but not limited to, mass transfer membranes, pressure regulators, filtration membranes, medical devices, separators for electrochemical storage devices, membranes for use in fuel cells, and/or the like.

The membrane for use in the present invention are made by a modified version of the dry-stretch process (also known as the CELGARD process). The dry-stretch process refers to a process where pore formation results from stretching the nonporous precursor. See, Kesting, R., Synthetic Polymeric Membranes, A structural perspective, Second Edition, John Wiley & Sons, New York, NY, (1985), pages 290-297. The dry-stretch process is distinguished from the wet process and particle stretch process, as discussed above.

The membrane for use in the present invention may be distinguished from prior dry-stretched membranes in at least two ways: 1) substantially round shape pores, and 2) a ratio of machine direction tensile strength to transverse direction tensile strength in the range of 0.5 to 5.0, preferably 0.5 to 4.0.

The membrane for use in the present invention may be distinguished from prior dry-stretched membranes in at least five ways: 1) substantially round shape pores, 2) a ratio of machine direction tensile strength to transverse direction tensile strength in the range of 0.5 to 5.0, 3) mean flow pore diameters of at least 0.04 microns, 4) high gas or moisture permeability, with JIS Gurley of less than about 100 seconds, and (5) hydrohead pressure higher than 140 psi.

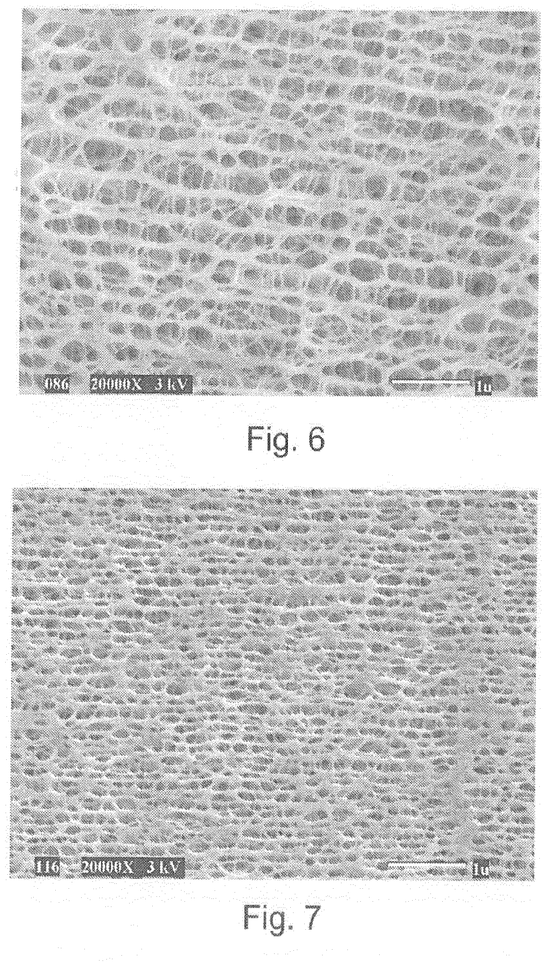

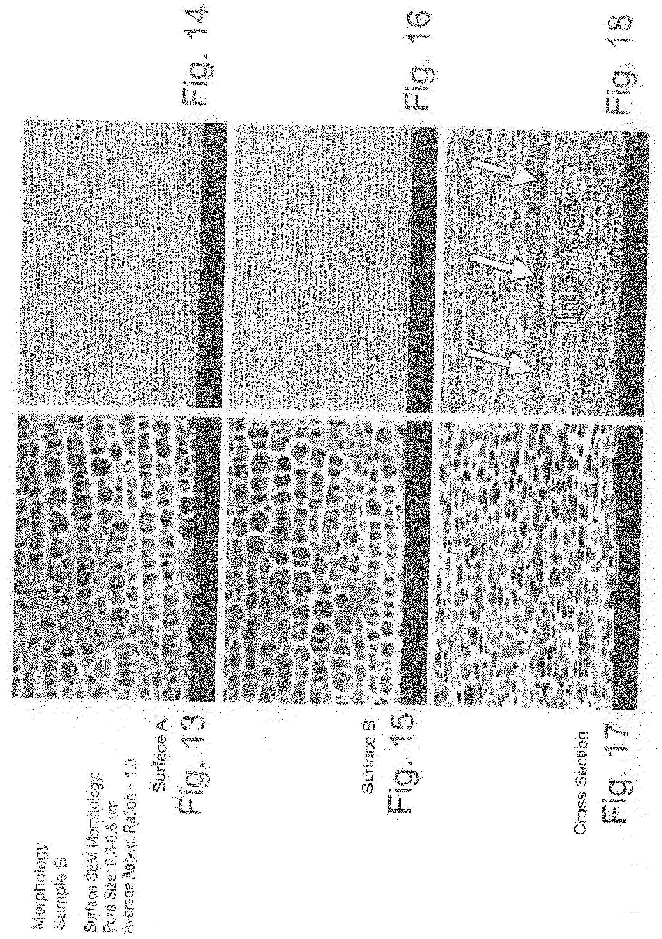

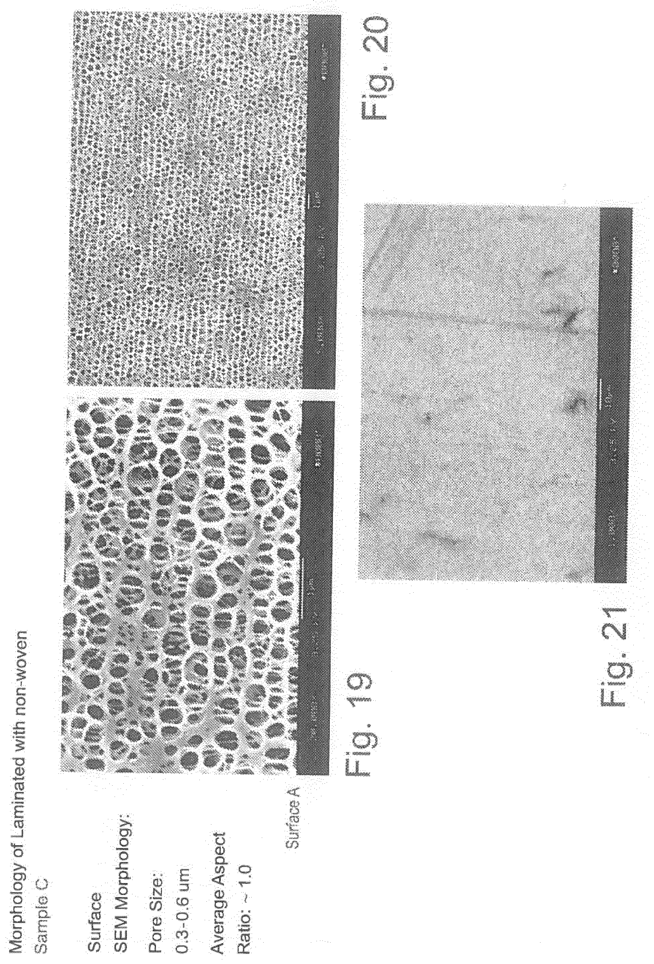

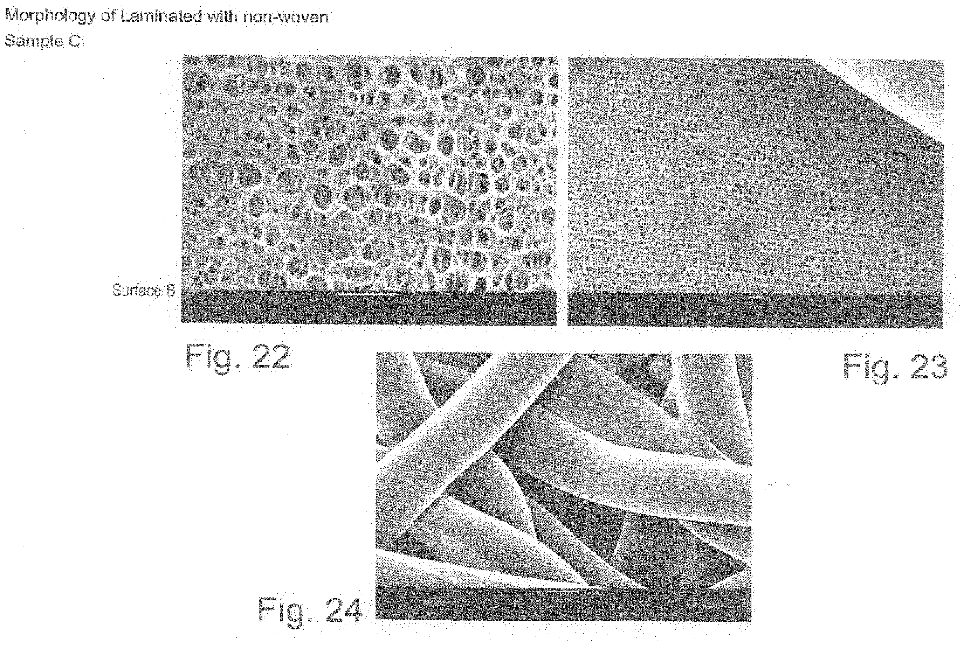

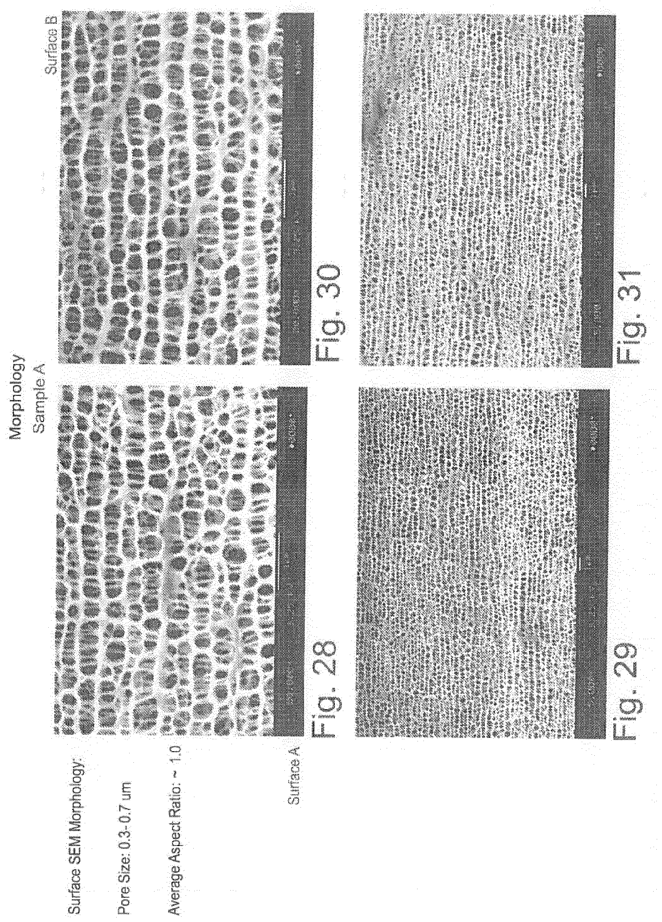

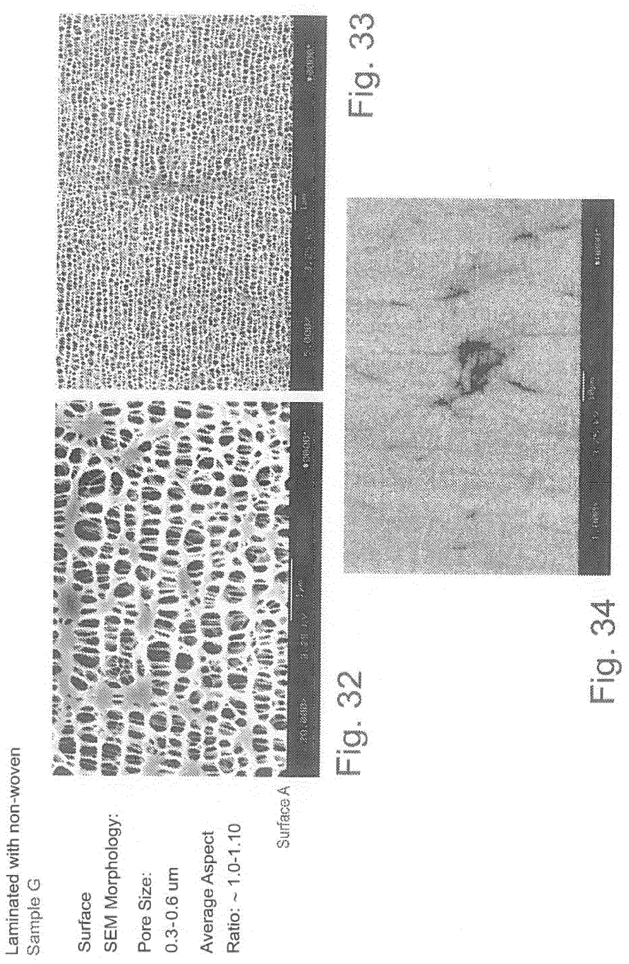

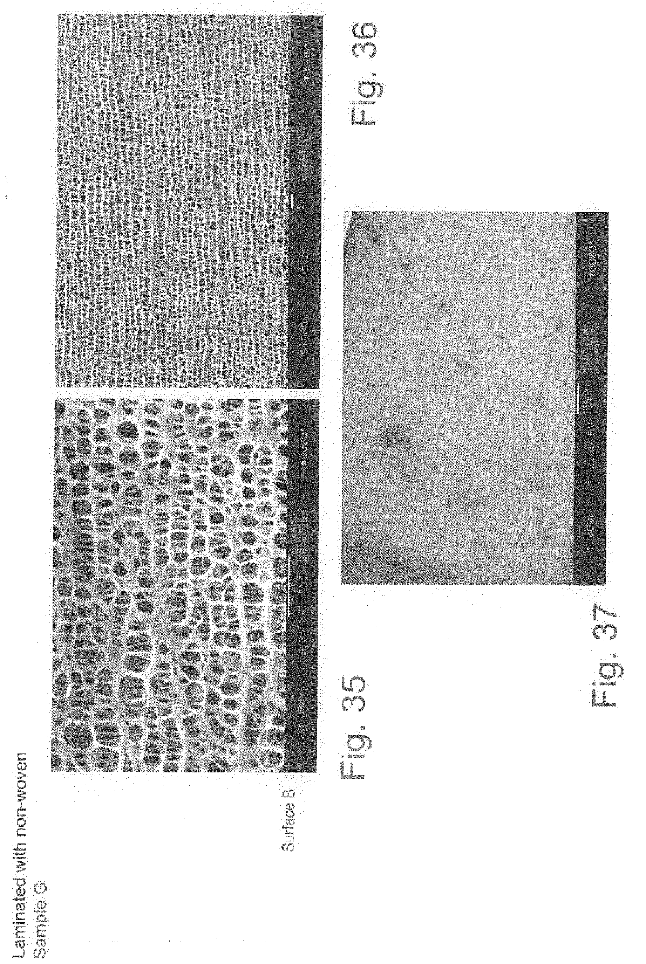

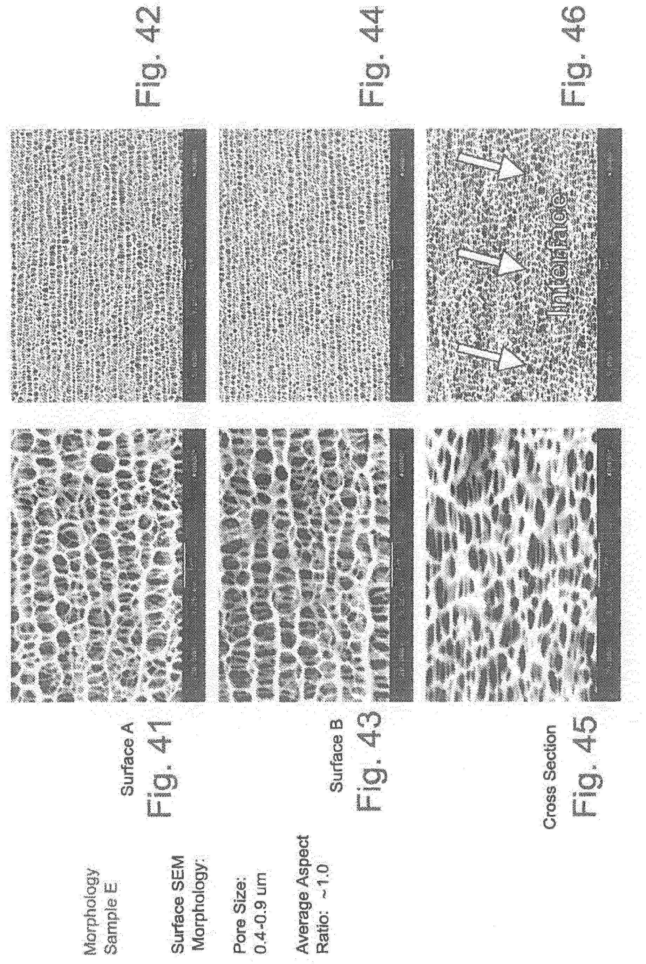

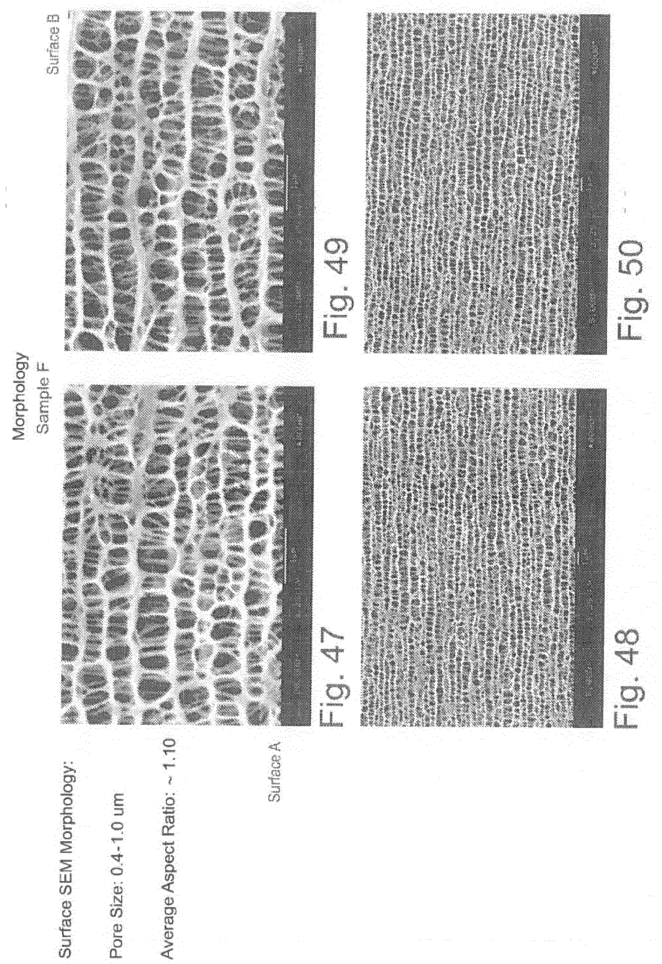

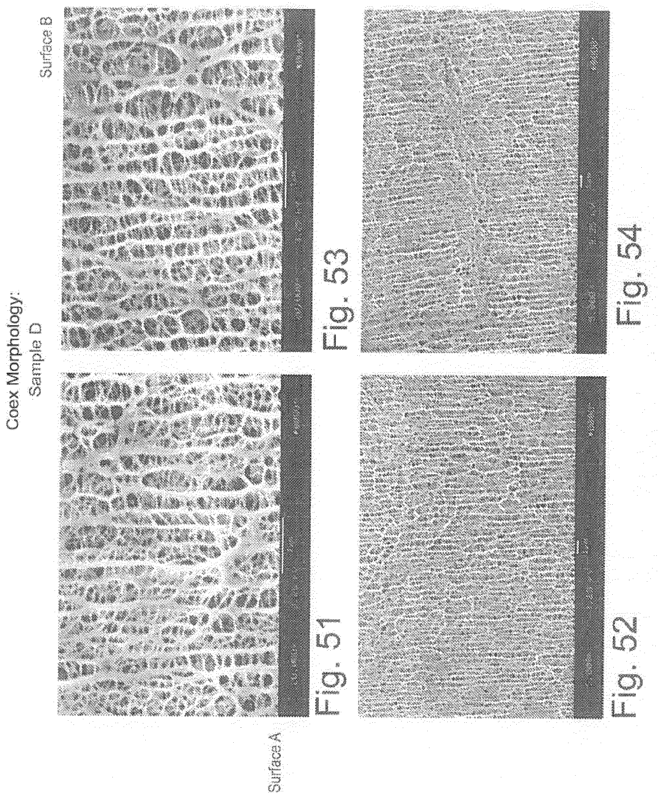

Regarding the pore shape, the pores are preferably characterized as substantially round shaped. See, for example, Figures 6-8, 13-16, 19, 20, 22, 23, 28-31, 32, 33, 35, 36, 41-44, 47-50, and 51-54. This pore shape is contrasted with the slit shaped pores of the prior conventional dry-stretched membranes. See Figures 1-3 and Kesting, *Ibid.* Further, the pore shape of the instant membrane may be characterized by an aspect ratio, the ratio of the length (MD) to the width (TD) of the pore. The aspect ratio ranges from 0.75 to 1.25. This is contrasted with the aspect ratio of the prior dry-stretched membranes which are greater than 5.0. See Table I below.

Regarding the ratio of machine direction (MD) tensile strength to transverse direction (TD) tensile strength, in the invention, this ratio is between 0.5 to 5.0. This ratio is contrasted with the corresponding ratio of the prior art membranes which is greater than 10.0. See Table I below.

U.S. Patent No. 6,602,593 is directed to a microporous membrane, made by a dry-stretch process, where the resulting membrane has a ratio of transverse direction tensile strength to machine direction tensile strength of 0.12 to 1.2. Therein, the TD/MD tensile ratio is obtained by a blow-up ratio of at least 1.5 as the precursor is extruded.

At least selected membrane may be further characterized as follows: an average pore size in the range of 0.03 to 0.30 microns (µm); a porosity in the range of 40-90%; and/or a transverse direction tensile strength of greater than 250 Kg/cm². The foregoing values are exemplary values and are not intended to be limiting, and accordingly should be viewed as merely representative of at least selected embodiments of the instant membrane.

At least selected membrane may be further characterized as follows: a pore size in the range of 0.30 to 1.0 microns (µm); and an average aspect ratio in the range of about 1.0 to 1.10. The foregoing values are exemplary values and are not intended to be limiting, and accordingly should be viewed as merely representative of at least selected embodiments of the instant membrane.

At least selected membrane may be further characterized as follows: an average Aquapore size of at least 0.07 microns (µm); a porosity in the range of 40-90%; and/or a transverse direction tensile strength of greater than 250 Kg/cm². The foregoing values are exemplary values and are not intended to be limiting, and accordingly should be viewed as merely representative of at least selected possibly preferred embodiments of the instant membrane.

The preferred polymers used in the membrane may be characterized as thermoplastic polymers. These polymers may be further characterized as semi-crystalline polymers. In one embodiment, semi-crystalline polymer may be a polymer having a crystallinity in the range of 20% to 80%. Such polymers may be selected from the following group: polyolefins, fluorocarbons, polyamides, polyesters, polyacetals (or polyoxymethylenes), polysulfides, polyvinyl alcohols, co-polymers thereof, and combinations thereof. Polyolefins may be preferred and may include polyethylenes (LDPE, LLDPE, HDPE, UHMWPE), polypropylene, polybutene, polymethylpentene, co-polymers thereof, and blends thereof. Fluorocarbons may include polytetrafluoroethylene (PTFE), polychlorotrifluoroethylene (PCTFE), fluorinated ethylene propylene (FEP), ethylene chlortrifluoroethylene (ECTFE), ethylene tetrafluoroethylene (ETFE), polyvinylidene fluoride (PVDF), polyvinylfluoride (PVF), prefluoroalkoxy (PFA) resin, co-polymers thereof, and blends thereof. Polyamides may include, but are not limited to: polyamide 6, polyamide 6/6, Nylon 10/10, polyphthalamide (PPA), co-polymers thereof, and blends thereof. Polyesters may include polyester terephthalate (PET), polybutylene terephthalate (PBT), poly-1-4-cyclohexylenedimethylene terephthalate (PCT), and liquid crystal polymers (LCP). Polysulfides include, but are not limited to, polyphenylsulfide, co-polymers thereof, and blends thereof. Polyvinyl alcohols include, but are not limited to, ethylene-vinyl alcohol, co-polymers thereof, and blends thereof.

The membrane may include other ingredients, as is well known. For example, those ingredients may include: fillers (inert particulates typically used to reduce the cost of the membrane, but otherwise having no significant impact on the manufacture of the membrane), anti-static agents, anti-blocking agents, anti-oxidants, lubricants (to facilitate manufacture), colorants, and/or the like.

Various materials may be added to the polymers to modify or enhance the properties of the membrane. Such materials include, but are not limited to: (1) polyolefins or polyolefin oligomers with a melting temperature less than 130°C; (2) mineral fillers include, but are not limited to: calcium carbonate, zinc oxide, diatomaceous earth, talc, kaolin, synthetic silica, mica, clay, boron nitride, silicon dioxide, titanium dioxide, barium sulfate, aluminum hydroxide, magnesium hydroxide, and/or the like, and blends thereof; (3) elastomers include, but are not limited to: ethylene-propylene (EPR), ethylene-propylene-diene (EPDM), styrene- butadiene (SBR), styrene isoprene (SIR), ethylidene norbornene (ENB), epoxy, and polyurethane, and blends thereof; (4) wetting agents include, but are not limited to, ethoxylated alcohols, primary polymeric carboxylic acids, glycols (*e.g.*, polypropylene glycol and polyethylene glycols), functionalized polyolefins, etc.; (5) lubricants, for example, silicone, fluoropolymers, Kemamide®, oleamide, stearamide, erucamide, calcium stearate, or other metallic stearate; (6) flame retardants for example, brominated flame retardants, ammonium phosphate, ammonium hydroxide, alumina trihydrate, and phosphate ester; (7) cross-linking or coupling agents; (8) polymer processing aids (such as but not limited plasticizer or processing oil, for example, less than 10% by weight processing oil); and (9) any types of nucleating agents including beta-nucleating agents for polypropylene. (At least the preferred instant membrane, however, specifically excludes any beta-nucleated polypropylene (BNPP) as disclosed in U.S. Patent No. 6,368,742. A beta-nucleating agent for polypropylene is a substance that causes the creation of beta crystals in polypropylene.)

The membrane may be a single ply or multi-ply membrane. Regarding the multi-ply membrane, the biaxially oriented membrane may be one ply or layer of the multi-ply membrane or the instant membrane may be all of the plies of the multi-ply membrane. If the membrane is less than all of the plies of the multi-ply membrane, the multi-ply membrane may be made via a coating, lamination or bonding process. If the membrane is all plies of the multi-ply membrane, the multi-ply membrane may be made via a lamination or extrusion process (such as coextrusion). Further, multi-ply membranes may be made of plies of the same materials or of differing materials.

The membrane is made by a modified dry-stretch process where the precursor membrane is biaxially stretched (*i.e.,* not only stretched in the machine direction, but also in the transverse machine direction). This process will be discussed in greater detail below.

In general, the process for making the foregoing membrane includes the steps of extruding a nonporous (single or multi-layer) precursor, and then biaxially stretching the nonporous precursor. Optionally, the nonporous precursor may be annealed prior to stretching. The biaxial stretching includes a machine direction stretch and a transverse direction stretch with a simultaneous controlled machine direction relax. The machine direction stretch and the transverse direction stretch may be simultaneous or sequential. The machine direction stretch is followed by the transverse direction stretch with the simultaneous machine direction relax. This process is discussed in greater detail below.

Extrusion is generally conventional (conventional refers to conventional for a dry-stretch process). The extruder may have a slot die (for flat precursor) or an annular die (for parison or bubble precursor). In the case of the latter, an inflated parison technique may be employed (e.g., a blow up ratio (BUR) of less than 1.5 as the precursor is extruded). However, the birefringence of the nonporous precursor does not have to be as high as in the conventional dry-stretch process. For example, in the conventional dry-stretch process to produce a membrane with a > 35% porosity from a polypropylene resin with a melt flow index (MFI) < 1.0, the birefringence of the precursor would be > 0.0130; while with the instant process, the birefringence of the PP precursor could be as low as 0.0100. In another example, a membrane with a > 35% porosity from a polyethylene resin, the birefringence of the precursor would be > 0.0280; while with the instant process, the birefringence of the PE precursor could be as low as 0.0240.

Annealing (optional) may be carried out, in one embodiment, at temperatures between Tₘ-80°C and Tₘ-10°C (where Tₘ is the melt temperature of the polymer); and in another embodiment, at temperatures between Tₘ-50°C and Tₘ-15°C. Some materials, *e.g.*, those with high crystallinity after extrusion, such as polybutene, may require no annealing. Additional optional steps may be carried out, for example but not limited to heat set, extraction, removal, winding, slitting, and/or the like. Machine direction stretch may be conducted as a cold stretch or a hot stretch or both, and as a single step or multiple steps. In one embodiment, cold stretching may be carried out at < Tₘ-50°C, and in another embodiment, at < Tₘ-80°C. In one embodiment, hot stretching may be carried out at< Tₘ-10°C. In one embodiment, total machine direction stretching may be in the range of 50-500%, and in another embodiment, in the range of 100-300%. During machine direction stretch, the precursor may shrink in the transverse direction (conventional).

Transverse direction stretching includes a simultaneous controlled machine direction relax. This means that as the precursor is stretched in the transverse direction (TD stretch) the precursor is simultaneously allowed to contract (*i.e.,* relax), in a controlled manner, in the machine direction (MD relax). The transverse direction stretching may be conducted as a cold step, or a hot step, or a combination of both. In one embodiment, total transverse direction stretching may be in the range of 100-1200%, and in another embodiment, in the range of 200-900%. In one embodiment, the controlled machine direction relax may range from 5-80%, and in another embodiment, in the range of 15-65%. In one embodiment, transverse stretching may be carried out in multiple steps. During transverse direction stretching, the precursor may or may not be allowed to shrink in the machine direction. In an embodiment of a multi-step transverse direction stretching, the first transverse direction step may include a transverse stretch with the controlled machine direction relax, followed by simultaneous transverse and machine direction stretching, and followed by transverse direction relax and no machine direction stretch or relax.

Optionally, the precursor, after machine direction and transverse direction stretching may be subjected to a heat setting, as is well known.

The foregoing membrane and process are further illustrated in the following nonlimiting examples.

### Examples

Unless described otherwise, the test values reported herein, thickness, porosity, tensile strength, and aspect ratio, were determined as follows: thickness-ASTM-D374 using the Emveco Microgage 210-A micrometer; porosity-ASTM D-2873; tensile strength-ASTM D-882 using an Instron Model 4201; and aspect ratio-measurements taken from the SEM micrographs.

The following examples were produced by conventional dry-stretched techniques, except as noted.

Example 1. Polypropylene (PP) resin is extruded using a 2.5 inch extruder. The extruder melt temperature is 221°C. Polymer melt is fed to a circular die. The die temperature is set at 220°C, polymer melt is cooled by blowing air. Extruded precursor has a thickness of 27 micrometers (µm) and a birefringence of 0.0120. The extruded film was then annealed at 150°C for 2 minutes. The annealed film is then cold stretched to 20% at room temperature, and then hot stretched to 228% and relaxed to 32% at 140°C. The machine direction (MD) stretched film has a thickness of 16.4 µm, and porosity of 25%. The MD stretched film is then transverse direction (TD) stretched 300% at 140°C with MD relax of 50%. The finished film has a thickness of 14.1 µm, and porosity of 37%. TD tensile strength of finished film is 550 Kg/cm². See Figure 6.

Example 2. Polypropylene (PP) resin is extruded using a 2.5 inch extruder. The extruder melt temperature is 220°C. Polymer melt is fed to a circular die. The die temperature is set at 200°C, polymer melt is cooled by blowing air. Extruded precursor has a thickness of 9.5 µm and a birefringence of 0.0160. HDPE resin is extruded using a 2.5 inch extruder. The extruder melt temperature is 210°C. Polymer melt is fed to a circular die. Die temperature is set at 205°C, polymer melt is cooled by air. Extruded precursor has a thickness of 9.5 µm and a birefringence of 0.0330. Two PP layers and one PE layers are laminated together to form a PP/PE/PP tri-layer film. Lamination roll temperature is 150°C. Laminated tri-layer film is then annealed at 125°C for 2 minutes. The annealed film is then cold stretched to 20% at room temperature, and then hot stretched to 160% and relaxed to 35% at 113°C. The MD stretched film has a thickness of 25.4 µm, and porosity of 39%. The MD stretched film is then TD stretched 400% at 115°C with MD relax of 30%. The finished film has a thickness of 19.4 µm and porosity of 63%. TD tensile strength of finished film is 350 Kg/cm². See Figure 7.

Example 3. PP resin and HDPE resin are extruded using a co-extrusion die to form a PP/PE/PP tri-layer film. Extruder melt temperature for PP is 243°C, and extruder melt temperature for PE is 214°C. Polymer melt is then fed to a co-extrusion die which is set at 198°C. Polymer melt is cooled by blowing air. The extruded film has a thickness of 35.6 µm. The extruded precursor is then annealed at 125°C for 2 minutes. The annealed film is then cold stretched to 45% at room temperature and hot stretched to 247% and relaxed to 42% at 113°C. The MD stretched film has a thickness of 21.5 µm and porosity of 29%. The MD stretched film is then TD stretched 450% at 115°C with 50% MD relax. The finished film has a thickness of 16.3 µm and porosity of 59%. TD tensile strength of finished film is 570 Kg/cm².

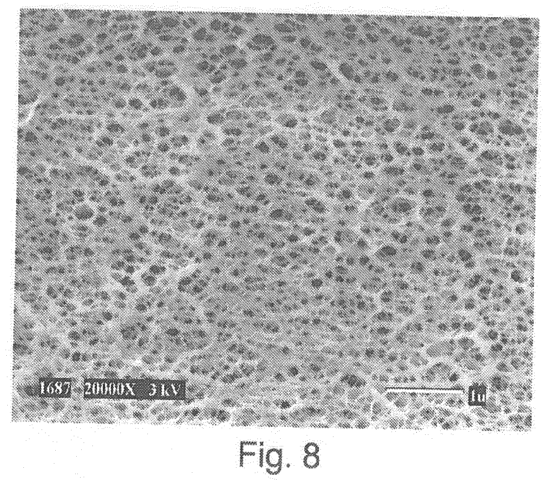

Example 4. PP resin and HDPE resin are co-extruded and MD stretched the same way as in Example 3. The MD stretched film is then TD stretched 800% at 115°C with 65% MD relax. The finished film has a thickness of 17.2 µm and porosity of 49%. TD tensile strength of finished film is 730 Kg/cm². See Figure 8.

Example 5. PP resin and PB resin are extruded using a co-extrusion die. Extruder melt temperature for PP is 230°C, and extruder melt for PB is 206°C. Polymer melt is then fed to a co-extrusion die which is set at 210°C. Polymer melt is then cooled by blowing air. The extruded film has a thickness of 36.0 µm. The extruded precursor is then annealed at 105°C for 2 minutes. The annealed film is then cold stretched to 20%, and then hot stretched at 105°C to 155% and then relaxed to 35%. The MD stretched film is then TD stretched 140% at 110°C with 20% MD relax. The finished film has a thickness of 14.8 µm and porosity of 42%. TD tensile strength of finished film is 286 Kg/cm².

Example 6. PP resin and PE resin are extruded using a co-extrusion die to form a PP/PE/PP trilayer film. Extruder melt temperature for PP is 245°C, and extruder melt temperature for PE is 230°C. Polymer melt is then fed to a co-extrusion die which is set at 225°C. Polymer melt is cooled by blowing air. The extruded film has a thickness of 27 µm and a birefringence of 0.0120. The extruded precursor is then annealed at 115°C for 2 minutes. The annealed film is then cold stretched to 22% at room temperature and hot stretched to 254% and relaxed to 25% at 120°C (total machine direction stretch = 251%). The MD stretched film has a thickness of 15 µm and porosity of 16%. The MD stretched film is then TD stretched 260% at 130°C with 50% MD relax, followed by a simultaneous MD and TD stretch of 50% and 216% in each direction at 130°C, and finally the film is held fast in the MD (100%) and allowed to relax 57.6% in the TD at a temperature of 130°C. The finished film has a thickness of 7.6 µm and porosity of 52%. TD tensile strength of finished film is 513 Kg/cm².

Example 7. Polypropylene and polyethylene resin(s) are extruded using a co-extrusion die to form a PP/PE/PP tri-layer film. Extruder melt temperature for PP is 222°C, and extruder melt temperature for PE is 225°C. Polymer melt is then fed to a co-extrusion die which is set at 215°C. Polymer melt is cooled by blowing air. The extruded film has a thickness of 40 µm and birefringence of 0.0110. The extruded precursor is then annealed at 105°C for 2 minutes. The annealed film is then cold stretched to 36% at room temperature and hot stretched to 264% and relaxed to 29% at 109°C (total machine direction stretch = 271%). The MD stretched film has a thickness of 23.8 µm and porosity of 29.6%. The MD stretched film is then TD stretched 1034% at 110°C with 75% MD relax. The finished film has a thickness of 16.8 µm and porosity of 46%. TD tensile strength of finished film is 1037 Kg/cm².

In the following Table I the results of the foregoing examples are summarized and compared to two commercially available dry-stretched membranes: Com A) CELGARD® 2400 (single ply polypropylene membrane), See Figure 2; and Com B) CELGARD® 2300 (tri-layer polypropylene/polyethylene/polypropylene), see Figure 3.

**TABLE I**

| | **TD stretching** | **Thickness (µm)** | **Porosity** | **TD Tensile strength (kg/cm²)** | **MD Tensile strength (kg/cm²)** | **MD/TD tensile ratio** | **MD/TD Aspect ratio** |
|---|---|---|---|---|---|---|---|
| **Com A** | N/A | 25.4 | 37% | 160 | 1700 | 10.6 | 6.10 |
| **cCom B** | N/A | 25.1 | 40% | 146 | 1925 | 13.2 | 5.50 |
| **Ex 1** | 300% | 14.1 | 37% | 550 | 1013 | 1.8 | 0.90 |
| **Ex 2** | 400% | 19.4 | 63% | 350 | 627 | 1.8 | 0.71 |
| **Ex 3** | 450% | 16.3 | 59% | 570 | 754 | 1.3 | -- |
| **Ex 4** | 800% | 17.2 | 49% | 730 | 646 | 0.9 | 0.83 |
| **Ex 5** | 140% | 14.8 | 42% | 286 | 1080 | 3.8 | -- |
| **Ex 6** | 418% | 7.6 | 52% | 513 | 1437 | 2.8 | -- |
| **Ex 7** | 1034% | 16.8 | 46% | 1037 | 618 | 0.6 | -- |

Disclosed membranes include:
Preferred JIS Gurley ≤ 2.5 to ∼ 25 for monolayer PP air filtration membrane.
Preferred JIS Gurley ≤ 0.5 to ∼ 5 for monolayer PP HEPA/ULPA membrane.
Preferred round pore structure and highly uniform pore structure across the membrane.

In accordance with the use of the present invention, the membranes may have or may be:
Made by dry process, no oil / solvent is added.
High porosity: 40%-90%.
   Highly hydrophobic.
   Hydro-head pressure > 140 psi, water intrusion pressure >80 psi.

Unique pore structure as characterized by capillary flow Porometry/Aquapore Test/SEM: mean flow pore diameter measured by capillary flow of at least about 0.04 micron; Uniform, round or non-slit type of pore structure, with narrow range of pore diameter. Aquapore size of at least about 0.07 micron

High Gas/Air/moisture Permeability: JIS Gurley 1.0 to 100; high flow rate as characterized by capillary flow porometery; WVTR ≥8,000 g/m²-day.
Balanced MD/TD strength: TD strength (>300 kg/cm2).
Low TD shrinkage:TD shrinkage at 90C ≤ 2%.
Preferred PP Polymer: MFI = 0.1 to 10.0, polymer's crystallinity >45%.
Preferred PE polymer: MFI = 0.01 to 5.0, crystallinity > 50%
MFI tested with ASTM D-1238 method.

Below are the testing results for eight membranes (A-G and M), composites or laminates for the use of the present invention and for a comparative sample Com C:

**Table II**

| **General Properties** | | | | | | | | | | |
|---|---|---|---|---|---|---|---|---|---|---|
| **Sample ID** | **Unit** | **Com C** | **A** | **B** | **C** | **D** | **E** | **F** | **G** | **M** |
| **Sample Description** | | **PP Mono-layer Comparative example** | **PP Mono-layer** | **PP/PP Bonded Bi-layer** | **PP laminated with non-woven** | **PP/PE/PP co-extruded trilayer** | **PP/PP Bond-ed Bi-layer** | **PP Mono-layer** | **PP laminated with non-woven** | **PP/PE/PP co-extruded trilayer** |
| **AVG Thickness,** | **µm** | **25** | **18** | **20** | **79** | **21** | **24** | **14** | **77** | **22** |
| **Porosity,** | **%** | **55** | **73** | **65** | **-** | **76** | **80** | **81** | **-** | **60** |
| **Puncture Strength** | **grams** | **335** | **226** | **374** | **553** | **256** | **285** | **135** | **358** | **346** |
| **MD Tensile** | **kgf/c m2** | **1055** | **754** | **938** | **-** | **500** | **533** | **507** | **-** | **862** |
| **TD Tensile** | **kgf/c m2** | **135** | **493** | **711** | **-** | **450** | **491** | **461** | **-** | **473** |
| **MD shrinkage at 90C** | **%** | **5.0** | **6.1** | **5.0** | **1.21** | **13.8** | **6.0** | **6.5** | **2.29** | **5.5** |
| **TD shrinkage at 90C** | **%** | **0.0** | **0.4** | **∼0.0** | **0.46** | **1.8** | **∼0.0** | **∼0.0** | **0.19** | **1.5** |
| **AVG JIS Gurley,** | **Sec/1 00cc** | **200** | **32** | **60** | **85** | **35** | **26** | **14** | **45** | **65** |
| **Mean flow pore diameter** | **µm** | **0.0365** | **0.0543** | **0.0501** | **0.0468** | **0.0256** | **0.0610** | **0.0737** | **0.0542** | **0.250** |
| **Stdev of mean flow pore diameter** | | **0.0261** | **0.0183** | **0.0187** | **0.0181** | **0.0119** | **0.0190** | **0.0221** | **0.0183** | **0.110** |
| **Bubble Point Diameter** | **µm** | **0.1141** | **0.0948** | **0.0892** | **0.0736** | **0.0504** | **0.1078** | **0.1039** | **0.0808** | **0.049** |
| **Hydrohead Pressure** | **psi** | **155** | **149** | **159** | **277** | **364** | **222** | **153** | **206** | **377** |
| **Water Intrusion Pressure** | **psi** | **>80** | **>80** | **>80** | **>80** | **>80** | **>80** | **>80** | **>80** | **>80** |
| **WVTR** | **g/m2. day** | **< 6000** | **29300** | **178000** | **8560** | **29800** | **>30000** | **>30000** | **23000** | **16500** |

WVTR testing is based on ASTM F2298-03 using the moisture gradient method.
Test Methods for Water Vapor Diffusion Resistance and Air Flow Resistance of Clothing Materials Using the Dynamic Moisture Permeation Cell.
Testing condition: Top cell humidity 95%, bottom cell humidity 5%, Moisture gradient 90%. Ambient temperatures.
Thickness was measured based on ASTM-D374 using Emveco Microgage 210A micrometer.
JIS Gurley is gas permeability test measured by using the OHKEN permeability tester. JIS Gurley is defined as the time in seconds required for 100cc of air to pass through one square inch of film at constant pressure of 4.8 inches of water.
Porosity is measured by the method ASTM D2873.
Puncture Strength is measured using Instron Model 4442 based on ASTM D3763. The measurements were made across the width of the membrane and the averaged puncture energy (puncture strength) is defined as the force required to puncture the test sample. Tensile properties are tested using ASTM-882 standard using an Instron Model 4201.Shrinkage is measured at 90C for 60 minutes using a modified ASTM-2732-96 procedure. Mean flow pore diameter, bubble point pore diameter were measured with Capillary Flow analysis based on ASTM F316-86 standard. Hydrohead pressure was measured based on ASTM D3393-91.Water Intrusion was tested per ASTM F316-93 (Wetting fluid-water, 68.8 dynes/cm. Gas: air.)

Although not preferred, a filled, microporous ultra-high molecular weight polyethylene membrane could be used as a precursor in the stretching process to form a membrane for the use of the present invention.

Also, the membrane may be laminated on one or both sides to a non-woven substrate for additional durability, or it can be coated with a surfactant to make it hydrophilic.

The membrane may be formed by:
Biaxially stretching a blown film with simultaneous stretch and relax to produce a product useful in applications that require a high level of permeability to air, moisture vapor, and other gasses, but a high level of hydrophobicity. Such applications may include membrane-based humidity and temperature control systems such as liquid desiccant HVAC systems; membrane desalination; venting; fuel cell moisture control; liquid filtration; and the like.

Disclosed herein are membranes having the following properties:

**TABLE III**

| Measurement | Units | Performance |
|---|---|---|
| Thickness | µm | 10-100 |
| JIS Gurley | sec (per 100 ml) | 1-100 |
| MD tensile strength | kgf/cm² | 500-1500 |
| TD tensile strength | kgf/cm² | 350-800 |
| Porosity | percent | 60-90% |
| Mean flow pore diameter | µm | 0.04 - 0.07 |
| Bubble point diameter | µm | 0.09 - 0.11 |
| Aquapore size | µm | 0.04 - 0.12 |
| Hydrohead pressure | psi | 149 - 222 |
| Intrusion pressure | Psi | >80 |
| Pressure drop | psid (at 5.3 cm/ sec) | <3.90 |
| Particle efficiency | percent (at 2.5 cm/sec) | >99.99% |
| Melting point | °C | ≥165 |

The membrane is desirably a hydrophobic, highly permeable, chemically and mechanically stable, high tensile strength membrane. These properties appear to make it an ideal film for the following applications, each of which (with the exception of air filtration) may involve the selective passage of moisture vapor and blockage of liquid water:
1. HVAC
2. Liquid-desiccant (LD) air conditioning
3. Water-based air conditioning
4. Energy recovery ventilation (ERV)
5. Desalination
6. RO Desalination
7. Steam Desalination
8. Fuel cells
9. Liquid and/or air filtration
In the case of liquid and air filtration, the unique pore structure may have some specific benefits.

Laminated products may have the combination of the desired membrane moisture transport performance combined with the desired macro physical properties.

Monolayer PP products may have excellent balance of MD and TD physical properties while also being high performance membranes as measured by the moisture transport (moisture vapor transport) and hydrohead performance. The membrane may also have uncharacteristically high porosity (>60%) but still maintains the balanced physical properties when compared to more traditional membranes. Also, the membrane can be produced in union with a laminated PP nonwoven. The resultant laminated product may still retain the excellent moisture vapor transport and even more improved hydrohead performance. Also, the resultant product may have physical strength properties that far exceed comparative membranes. Therefore, the product may have the added advantage of being used in more physical abusive environments without a loss of the highly desirable membrane features.

The membrane may have a unique pore structure and distribution or properties that may appear to make it an ideal film for the following applications:
High efficiency air filtration,
HEPA/ULPA applications,
Near-zero emissions dust removal applications (cleanroom, vacuum bag, facemask, surgical suites, dust bag, cartridge),
Filtration applications:
   - high efficiency HVAC filter media
   - HEPA/ULPA media
   - filtration membrane composite
Liquid Filtration,
Protective Garments,
Functional garments/Performance sports wear,
Medical fabrics,
and the like.

With at least selected porous material, film, layer, membrane, laminate, coextrusion, or composite embodiments, some areas of improvement may include pore shapes other than slits, round shaped pores, increased transverse direction tensile strength, a balance of MD and TD physical properties, high performance related to, for example, moisture transport (or moisture vapor transport) and hydrohead pressure, reduced Gurley, high porosity with balanced physical properties, uniformity of pore structure including pore size and pore size distribution, enhanced durability, composites of such membranes with other porous materials, composites or laminates of such membranes, films or layers with porous nonwovens, coated membranes, coextruded membranes, laminated membranes, membranes having desired moisture transport, hydrohead performance, and physical strength properties, usefulness in more physically abusive environments without loss of desirable membrane features, combination of membrane moisture transport (or moisture vapor transport) performance combined with the macro physical properties, being hydrophobic, highly permeable, chemically and mechanically stable, having high tensile strength, combinations thereof, and/or the like.

While certain membranes made by the dry-stretch process have met with excellent commercial success, there is a need to improve, modify or enhance at least selected physical attributes thereof, so that they may be used in a wider spectrum of applications, perform better for particular purposes, and/or the like. In dry-stretch process membranes disclosed herein, some areas of improvement may include pore shapes other than slits, round shaped pores, increased transverse direction tensile strength, a balance of MD and TD physical properties, uniformity of pore structure including pore size and pore size distribution, high performance related to, for example, moisture transport (moisture vapor transport) and hydrohead pressure, reduced Gurley, high porosity with balanced physical properties, enhanced durability, composites of such membranes with other porous materials, composites or laminates of such membranes with porous nonwovens, coated membranes, coextruded membranes, laminated membranes, membranes having desired moisture transport (or moisture vapor transport), hydrohead performance, and physical strength properties, useful in more physically abusive environments without loss of desirable membrane features, combination of the membrane moisture transport (moisture vapor transport) performance combined with the macro physical properties, combinations thereof, and/or the like.

The porous membrane is a dry-stretch process, porous membrane, film, layer, or composite that is hydrophobic, highly permeable, chemically and mechanically stable, has high tensile strength, and combinations thereof. These properties appear to make it an ideal membrane or film for the following applications, each of which (with the exception of air filtration) may involve the selective passage of moisture vapor (or other gases) and blockage of liquid water (or other liquids):
1. HVAC:
   (a) Liquid-desiccant (LD) air conditioning (temperature and humidity control): In a membrane-based LD system, temperature and humidity may be controlled by a salt solution which absorbs or emits water vapor through a porous membrane. Heat is the motive force in the system (not pressure, as in most air conditioning systems). To make the system work, it may be necessary to have a hydrophobic membrane (to hold back the liquid) that readily passes water vapor.
   (b) Water-based air conditioning (temperature and humidity control): Evaporative cooling systems or cooling water systems operate on a somewhat different principle than the LD systems, but would use the same essential properties of the membrane.
2. Energy recovery ventilation (ERV): The simplest HVAC application uses the membrane as a key component of a heat and humidity exchange between make-up and exhaust air.
   Desalination: Steam desalination applications use the same membrane properties as HVAC. Because the membrane holds back liquid salt water but passes water vapor, a system can be constructed which has salt water and fresh water separated by a membrane. With the salt water at a higher temperature, fresh water vapor emits from the salt water, migrates through the membrane, and condenses to form the fresh water stream.
3. Fuel cells: In a fuel cell, the proton exchange membrane (PEM) must stay continually humidified. This can be accomplished with the use of a membrane-based humidification unit.
4. Liquid and/or air filtration: In these embodiments, the porous membrane may act as a simple filter. As the liquid, vapor, gas, or air passes through the membrane, particles that are too large to pass through the pores are blocked at the membrane surface.

Particularly in the cases of liquid and air filtration, the unique pore structure the membranes may have certain specific benefits, such as the benefits of durability, high efficiency, narrow pore size distribution, and uniform flow rate.

A selected porous mono-layer polypropylene (monolayer PP) membrane has excellent balance of MD and TD physical properties while also being a high performance membrane as measured by the moisture transport and hydrohead performance. This selected monolayer PP membrane may also have high porosity (>60%) but still maintain the balanced physical properties when compared to more traditional membranes. Also, this selected monolayer PP membrane or film can be produced in union with or laminated to a porous polypropylene (PP) nonwoven material (nonwoven PP) on one or both sides thereof. The resultant composite, membrane or product (monolayer PP / nonwoven PP) or (nonwoven PP / monolayer PP / nonwoven PP) may preferably retain the excellent moisture transport and even more improved hydrohead performance. Also, this resultant composite product (monolayer PP / nonwoven PP) or (nonwoven PP / monolayer PP / nonwoven PP) may have physical strength properties that far exceed comparative membranes. Therefore, this new resultant composite product (monolayer PP / nonwoven PP) or (nonwoven PP / monolayer PP / nonwoven PP) may have the added advantage of being useful in more physically abusive environments without a loss of the highly desirable membrane features. It is believed that these selected monolayer PP membrane and composite products (monolayer PP; monolayer PP / nonwoven PP; or, nonwoven PP / monolayer PP / nonwoven PP) are unique in their combination of membrane moisture transport performance combined with their macro physical properties. For example, prior membranes may have had porosity but not sufficient hydrohead pressure or performance, other membranes were too fragile, other membranes were strong but lacked other properties, or the like. While at least selected embodiments of the present invention may have, for example, desired porosity, moisture transport, hydrohead pressure, strength, and the like.

A selected porous multi-layer polypropylene (multilayer PP) membrane has excellent balance of MD and TD physical properties while also being a high performance membrane as measured by the moisture transport and hydrohead performance. This selected multilayer PP membrane may also have high porosity (>60%) but still maintain the balanced physical properties when compared to more traditional membranes. Also, this selected multilayer PP membrane or film can be produced in union with or laminated to a porous polypropylene (PP) nonwoven material (nonwoven PP) on one or both sides thereof. The resultant composite, membrane or product (multilayer PP / nonwoven PP) or (nonwoven PP / multilayer PP / nonwoven PP) may preferably retain the excellent moisture transport and even more improved hydrohead performance. Also, this resultant composite product (multilayer PP / nonwoven PP) or (nonwoven PP / multilayer PP / nonwoven PP) may have physical strength properties that far exceed comparative membranes. Therefore, this new resultant composite product (multilayer PP / nonwoven PP) or (nonwoven PP / multilayer PP / nonwoven PP) may have the added advantage of being useful in more physically abusive environments without a loss of the highly desirable membrane features. It is believed that these selected multilayer PP membrane and composite products (multilayer PP; multilayer PP / nonwoven PP; or, nonwoven PP / multilayer PP / nonwoven PP) are unique in their combination of membrane moisture transport performance combined with their macro physical properties. For example, prior membranes may have had porosity but not sufficient hydrohead pressure or performance, other membranes were too fragile, other membranes were strong but lacked other properties, or the like. While at least selected embodiments of the present invention may have, for example, desired porosity, moisture transport, hydrohead pressure, strength, and the like.

A selected porous mono-layer polyethylene (monolayer PE) membrane has excellent balance of MD and TD physical properties while also being a high performance membrane as measured by the moisture transport and hydrohead performance. This selected monolayer PE membrane may also have high porosity (>60%) but still maintain the balanced physical properties when compared to more traditional membranes. Also, this selected monolayer PE membrane or film can be produced in union with or laminated to a porous polyethylene (PE) nonwoven material (nonwoven PE) or porous polypropylene (PP) nonwoven material (nonwoven PP) on one or both sides thereof. The resultant composite, membrane or product (monolayer PE / nonwoven PE) or (nonwoven PE / monolayer PE / nonwoven PE) may preferably retain the excellent moisture transport and even more improved hydrohead performance. Also, this resultant composite product (monolayer PE / nonwoven PE) or (nonwoven PE / monolayer PE / nonwoven PE) may have physical strength properties that far exceed comparative membranes. Therefore, this new resultant composite product (monolayer PE / nonwoven PE) or (nonwoven PE / monolayer PE / nonwoven PE) may have the added advantage of being useful in more physically abusive environments without a loss of the highly desirable membrane features. It is believed that these selected monolayer PE membrane and composite products (monolayer PE; monolayer PE / nonwoven PE; or, nonwoven PE / monolayer PE / nonwoven PE) are unique in their combination of membrane moisture transport performance combined with their macro physical properties. For example, prior membranes may have had porosity but not sufficient hydrohead pressure or performance, other membranes were too fragile, other membranes were strong but lacked other properties, or the like. While at least selected embodiments of the present invention may have, for example, desired porosity, moisture transport, hydrohead pressure, strength, and the like.

A selected porous multi-layer polyethylene (multilayer PE) membrane has excellent balance of MD and TD physical properties while also being a high performance membrane as measured by the moisture transport and hydrohead performance. This selected multilayer PE membrane may also have high porosity (>60%) but still maintain the balanced physical properties when compared to more traditional membranes. Also, this selected multilayer PE membrane or film can be produced in union with or laminated to a porous polyethylene (PE) nonwoven material (nonwoven PE) or porous polypropylene (PP) nonwoven material (nonwoven PP) on one or both sides thereof. The resultant composite, membrane or product (multilayer PE / nonwoven PE) or (nonwoven PE / multilayer PE / nonwoven PE) may preferably retain the excellent moisture transport and even more improved hydrohead performance. Also, this resultant composite product (multilayer PE / nonwoven PE) or (nonwoven PE / multilayer PE / nonwoven PE) may have physical strength properties that far exceed comparative membranes. Therefore, this new resultant composite product (multilayer PE / nonwoven PE) or (nonwoven PE / multilayer PE / nonwoven PE) may have the added advantage of being useful in more physically abusive environments without a loss of the highly desirable membrane features. It is believed that these selected multilayer PE membrane and composite products (multilayer PE; multilayer PE / nonwoven PE; or, nonwoven PE / multilayer PE / nonwoven PE) are unique in their combination of membrane moisture transport performance combined with their macro physical properties. For example, prior membranes may have had porosity but not sufficient hydrohead pressure or performance, other membranes were too fragile, other membranes were strong but lacked other properties, or the like. While at least selected embodiments of the present invention may have, for example, desired porosity, moisture transport, hydrohead pressure, strength, and the like.

A selected porous monolayer polymer membrane, for example, a monolayer (may have one or more plies) polyolefin (PO) membrane, such as a polypropylene (PP) and/or polyethylene (PE) (including PE, PP, or PE + PP blends) monolayer membrane, has excellent balance of MD and TD physical properties while also being a high performance membrane as measured by the moisture transport (or moisture vapor transport) and hydrohead performance. This selected monolayer PO membrane may also have high porosity (>60%) but still maintain the balanced physical properties when compared to more traditional membranes. Also, this selected monolayer PO membrane or film can be produced in union with or laminated to a porous nonwoven material, such as a nonwoven polymer material, for example, a PO nonwoven material (such as a porous polyethylene (PE) nonwoven material (nonwoven PE) and/or porous polypropylene (PP) nonwoven material (nonwoven PP) (including PE, PP, or PE + PP blends)) on one or both sides thereof. The resultant composite, membrane or product (monolayer PO / nonwoven PO) or (nonwoven PO / monolayer PO / nonwoven PO) may preferably retain the excellent moisture transport (or moisture vapor transport) and even more improved hydrohead performance. Also, this resultant composite product (monolayer PO / nonwoven PO) or (nonwoven PO / monolayer PO / nonwoven PO) may have physical strength properties that far exceed comparative membranes. Therefore, this new resultant composite product (monolayer PO / nonwoven PO) or (nonwoven PO / monolayer PO / nonwoven PO) may have the added advantage of being useful in more physically abusive environments without a loss of the highly desirable membrane features. It is believed that these selected monolayer PO membrane and composite products (monolayer PO; monolayer PO / nonwoven PO; or, nonwoven PO / monolayer PO / nonwoven PO) are unique in their combination of membrane moisture transport performance combined with their macro physical properties. At least selected embodiments of the present invention may have, for example, desired porosity, moisture transport, moisture vapor transport, hydrohead pressure, strength, and the like.

A selected porous multi-layer polymer membrane, for example, a multi-layer (two or more layer) polyolefin (PO) membrane, such as a polypropylene (PP) and/or polyethylene (PE) (including PE, PP, or PE + PP blends) multilayer membrane, has excellent balance of MD and TD physical properties while also being a high performance membrane as measured by the moisture transport (or moisture vapor transport) and hydrohead performance. This selected multilayer PO membrane may also have high porosity (>60%) but still maintain the balanced physical properties when compared to more traditional membranes. Also, this selected multilayer PO membrane or film can be produced in union with or laminated to a porous PO nonwoven material (such as a porous polyethylene (PE) nonwoven material (nonwoven PE) and/or porous polypropylene (PP) nonwoven material (nonwoven PP)) on one or both sides thereof. The resultant composite, membrane or product (multilayer PO / nonwoven PO) or (nonwoven PO / multilayer PO / nonwoven PO) may preferably retain the excellent moisture transport and even more improved hydrohead performance. Also, this resultant composite product (multilayer PO / nonwoven PO) or (nonwoven PO / multilayer PO / nonwoven PO) may have physical strength properties that far exceed comparative membranes. Therefore, this new resultant composite product (multilayer PO / nonwoven PO) or (nonwoven PO / multilayer PO / nonwoven PO) may have the added advantage of being useful in more physically abusive environments without a loss of the highly desirable membrane features. It is believed that these selected multilayer PO membrane and composite products (multilayer PO; multilayer PO / nonwoven PO; or, nonwoven PO / multilayer PO / nonwoven PO) are unique in their combination of membrane moisture transport performance combined with their macro physical properties. For example, prior membranes may have had porosity but not sufficient hydrohead pressure or performance, other membranes were too fragile, other membranes were strong but lacked other properties, or the like, while at least selected embodiments of the present invention may have, for example, desired porosity, moisture transport, hydrohead pressure, strength, and the like.

In selected porous materials or porous membranes, the pores (openings) have the following pore aspect ratios (based on physical dimensions of the pore opening in the machine direction (MD)(length), and transverse machine direction (TD)(width) by measuring, for example, one or more of the pores (preferably several of the pores to ascertain an average) in SEMs of the surface, top or front (A side) of selected membranes or composites, for example, mono-layer, bi-layer or tri-layer membranes:
Typical:
   MD/TD aspect ratio in range of 0.75 to 1.50
Preferred:
   MD/TD aspect ratio in range of 0.75 to 1.25
Most Preferred:
   MD/TD aspect ratio in range of 0.85 to 1.25

In selected porous materials or porous membranes, if the MD/TD pore aspect ratio were 1.0, then a three-dimensional or 3D pore sphericity factor or ratio (MD/TD/ND) range could be: 0.25 to 8.0 or more; possibly preferred 1.0 to 2.5; and, most possibly preferred 1.0 to 2.0 or less (based on physical dimensions of the pore openings in the machine direction (MD)(length), transverse machine direction (TD)(width) and thickness direction or cross section (ND)(thickness); for example, measuring the MD and TD of one or more pores (preferably several pores to ascertain an average) in SEMs of the surface, top or front (A side), or the surface, bottom or back (B side), and measuring the ND of one or more pores (preferably several pores to ascertain an average) in SEMs of the cross-section, depth, or height (C side)(either length or width cross-section or both)(the ND dimension may be of a different pore than the MD and TD dimension as it may be difficult to measure the ND, MD and TD dimension of the same pore).

In selected porous materials or porous membranes, the three-dimensional or 3D MD/TD/ND pore sphericity factor or ratio range could be: 0.25 to 8.0 or more; possibly preferred 0.50 to 4.0; and, most possibly preferred 1.0 to 2.0 or less.

In selected porous materials or porous membranes, the pores (openings) have the following pore aspect ratios (based on physical dimensions of the pore opening in the machine direction (MD)(length), and transverse machine direction (TD)(width) based on measuring the pores in SEMs of the top or front (A side) of selected mono-layer and tri-layer membranes:
Here are the typical numbers for aspect ratio range of Machine
direction MD (length) and Transverse direction TD (width):
MD/TD aspect ratio in range of 0.75 to 1.50

In selected porous materials or porous membranes, the pores (openings) have the following three dimensional or 3D pore sphericity factors or ratios (based on physical dimensions of the pore openings in the machine direction (MD)(length), transverse machine direction (TD)(width) and thickness direction or cross section (ND)(thickness); for example, measuring one or more pores (preferably several pores to ascertain an average) in SEMs of the surface, top or front (A side), the surface, bottom or back (B side), and the cross-section, depth, or height (C side)(either length or width cross-section or both)(the ND dimension may be of a different pore than the MD and TD dimension as it may be difficult to measure the ND, MD and TD dimension of the same pore) of selected membranes, layers or composites, for example, of selected mono-layer and tri-layer membranes:
For example:
   Typical:
      MD/TD aspect ratio in range of 0.75 to 1.50
      MD/ND dimension ratio in range of 0.50 to 7.50
      TD/ND dimension ratio in range of 0.50 to 5.00
   Preferred:
      MD/TD aspect ratio in range of 0.75 to 1.25
      MD/ND dimension ratio in range of 1.0 to 2.5
      TD/ND dimension ratio in range of 1.0 to 2.5
   Most Preferred:
      MD/TD aspect ratio in range of 0.85 to 1.25
      MD/ND dimension ratio in range of 1.0 to 2.0
      TD/ND dimension ratio in range of 1.0 to 2.0

In porous materials or porous membranes, the pores (openings) have the following pore sphericity factors or ratios (based on physical dimensions of the pore opening in the machine direction (MD)(length), transverse machine direction (TD)(width) and thickness direction or cross section (ND)(thickness) based on measuring the pores in SEMs of the top or front (A side) and the length and with cross-sections (C side) of selected mono-layer and tri-layer membranes: Here are the typical numbers for sphericity factor or ratio range of Machine direction MD (length), Transverse direction TD (width), and Thickness direction ND (vertical height):
MD/TD aspect ratio in range of 0.75 to 1.50
MD/ND dimension ratio in range of 0.50 to 7.50
TD/ND dimension ratio in range of 0.50 to 5.00

Microporous membranes are made by a dry-stretch process and has substantially round shaped pores and a ratio of machine direction tensile strength to transverse direction tensile strength in the range of 0.5 to 5.0. The method of making the foregoing microporous membrane includes the steps of: extruding a polymer into a nonporous precursor, and biaxially stretching the nonporous precursor, the biaxial stretching including a machine direction stretching and a transverse direction stretching, the transverse direction stretching including a simultaneous controlled machine direction relax.

A porous membrane is made by a modified dry-stretch process and has substantially round shaped pores, a ratio of machine direction tensile strength to transverse direction tensile strength in the range of 0.5 to 5.0, and has low Gurley as compared to prior dry-stretch membranes, has larger and more uniform mean flow pore diameters as compared to prior dry-stretch membranes, or both low Gurley and larger and more uniform mean flow pore diameters.

While membranes made by the conventional dry-stretch process have met with excellent commercial success, in accordance with at least selected embodiments of the present invention, there is provided improved, modified or enhanced at least selected physical attributes thereof, so that they may be used in a wider spectrum of applications, may perform better for particular purposes, and/or the like.

While at least certain air filters have met with commercial success, in accordance with at least selected embodiments of the present invention, there is provided improved, modified or enhanced filtration media so that they may be used in a wider spectrum of filtration or separation applications, may perform better for particular purposes, and/or the like.

While certain such flat sheet porous materials for filtration or separation processes have met with commercial success, in accordance with at least selected embodiments of the present invention, there is provided improved, modified or enhanced porous materials so that they may be used in a wider spectrum of applications, may perform better for particular purposes, and/or the like.

While porous materials for the selective passage of gases or humidity (moisture vapor) and blockage of liquid water or salt water may have met with commercial success, such as RO membranes sold by Dow Chemical, ePTFE membranes sold by W.L. Gore, BHA, and others, in accordance with at least selected embodiments of the present invention, there is provided improved, modified or enhanced porous materials so that they may be used in a wider spectrum of applications, may perform better for particular purposes, and/or the like.

An air-filter includes at least one porous membrane such as a microporous membrane.

A microporous membrane is made by a dry-stretch process and has substantially round shaped pores and a ratio of machine direction tensile strength to transverse direction tensile strength in the range of 0.5 to 5.0. The method of making the foregoing microporous membrane includes the steps of: extruding a polymer into a nonporous precursor, and biaxially stretching the nonporous precursor, the biaxial stretching including a machine direction stretching and a transverse direction stretching, the transverse direction stretching including a simultaneous controlled machine direction relax.

A porous membrane is made by a modified dry-stretch process and has substantially round shaped pores, a ratio of machine direction tensile strength to transverse direction tensile strength in the range of 0.5 to 5.0, and has low Gurley as compared to prior dry-stretch membranes, has larger and more uniform mean flow pore diameters as compared to prior dry-stretch membranes, or both low Gurley and larger and more uniform mean flow pore diameters.

An air-filter cartridge may include at least one pleated microporous membrane, a plurality of microporous membranes, and it may further include end-plates, spacers, or the like.

An air-filter cartridge, as used herein, refers to a cartridge that may either be used in an air-filter or an air-purifier. The instant application uses the term air-filter cartridge; however, it may include air-purifier cartridges as well. Also, the membrane may be pleated to provide a large filtration area in a relatively small volume. In the alternative, the membrane may have a sinusoidal pattern to provide a large filtration area in a relatively small volume.

Further, the membrane may have any configuration; for example, it may have a configuration selected from the group consisting of pleated cylinder configuration, pleated flat sheet configuration, and spiral wound configuration.

In an example manufacturing process, at least one flat sheet microporous membrane is constructed and then, the membrane is folded into a pleated or an accordion folded shape thereby increasing the filtration area. Subsequently, the pleated membrane may be wound into a cylinder, and sealed via end-plates thereby forming an air-filter cartridge. The air-filter cartridge may be inserted into a housing, and sealed via end caps.

Disclosed herein are embodiments, which may be well suited as battery separators, the possibly preferred membrane is preferably made of one or more polyolefins and may be further characterized by one or more of the following parameters: thickness, porosity, average pore size, puncture strength, JIS ***Gurley*** Number, and shutdown temperature.

The thickness of the membrane may be less than 6.0 mils (150 microns). In another embodiment, the thickness may range from 10 microns to 150 microns. In yet another embodiment, the thickness may range from 10 microns to 50 microns.

The porosity of the membrane may be between 40 and 90%. In one embodiment, porosity ranges from 60-90%. In yet another embodiment, porosity ranges from 65-80%.

The average Aquapore size of the membrane is at least about 0.07 microns. The average pore size may range from 0.07-0.12 microns.

The puncture strength may be greater than or equal to 300 gr-force/mil. Puncture strength is determined by averaging 10 measurements across the width of the final product using a Midtech Stevens LFRA texture analyzer and a needle with a 1.65 mm diameter and a 0.5 mm radius recording data at a rate of 2 mm/sec with a maximum amount of deflection of 6 mm.

The JIS ***Gurley*** Number (normalized to one mil thickness) may be less than 100 sec/100 cc/mil thickness. In one embodiment, the JIS ***Gurley*** number ranges from 12 to 80 sec/10 cc/mil.

The intrinsic viscosity (IV) of the membrane may be greater than or equal to 1.0 dl/g. In another embodiment, the IV may be greater than or equal to 5.0 dl/g. In another embodiment, the IV may preferably be greater than or equal to 3.0 dl/g. The IV of the film is not the weighted average of the pre-extruded resins composing the membrane because during extrusion the polymers undergo chain scission and the molecular weight is thereby lowered. Intrinsic viscosity, as used herein, refers to the measure of the capability of a polymer in solution to enhance the viscosity of the solution. The intrinsic viscosity number is defined as the limiting value of the specific viscosity/concentration ratio at zero concentration. Thus, it becomes necessary to find the viscosity at different concentrations, and then extrapolate to zero concentration. The variation of the viscosity number with concentration depends on the type of molecule as well as the solvent. In general, the intrinsic viscosity of linear macromolecular substances is related to the weight average molecular weight or degree of polymerization. With linear macromolecules, viscosity number measurements can provide a method for the rapid determination of molecular weight when the relationship between viscosity and molecular weight has been established. IV is measured by first dissolving 0.02 g of the membrane in 100 ml of decalin at 150° C. for one hour, and then, determining its intrinsic viscosity at 135° C. via an Ubbelohd viscometer. This is according to ASTM D4020 (RSV values reported herein).

The shutdown temperature may be less than 260° C (260 degrees Centigrade or Celsius). In one embodiment, the shutdown temperature may be less than 190° C. In yet another embodiment, the shutdown temperature may be less than 140° C. In still another embodiment, the shutdown temperature may be less than 130° C. In yet still another embodiment, the shutdown temperature may be less than 120° C.

The membrane may be made of a single polymer or a blend of polymers or of layers of the same or different polymers or of layers of different materials bonded, laminated or coextruded together. The possibly preferred polymers are polyolefins, such as polypropylene (PP) and/or polyethylene (PE). For example, the membrane may be made of one or more layers of PP and/or PE. In one particular example, the membrane is a porous PP film or sheet. In another particular example, the membrane is a porous PE film or sheet. In yet another particular example, the membrane is a tri-layer membrane made of two exterior PP layers and an intermediate or center PE layer. In another particular example, the membrane is a bi-layer membrane made of two PP layers, two PE layers, or one PP and one PE layer bonded together, laminated together, or coextruded together. In still yet another particular example, the membrane is a composite of a porous PP film or sheet and a porous material such as nonwoven glass or PP material. In still another particular example, the membrane is a porous film or sheet made of a blend of polyolefins having differing molecular weights.

A gas filtration media may comprises a microporous membrane. A gas filtration media, as used herein refers to a filtration media for removal of particulates from a gas, e.g., air.

The gas filter media may include an ultrahigh molecular weight polyethylene and an inorganic material. The gas filter media may further include a processing oil (i.e., oil remains in the media after extraction). The gas filter media may further include a thermoplastic polyolefin, conventional additives, such as stabilizers and antioxidants, and the like as is well known in the art.

The gas filter media may be used as a filter media for any end-use applications. For example, the gas filter media may be used as a filter media for an end-use application selected from the group consisting of particulate removal from gases, air-filtration application, elevated temperature application, baghouse application, particulate filtration in food and pharmaceuticals, particulate filtration in combustion process, particulate filtration in metals, and particulate filtration in cements. Particulate removal from gases includes industries such as HVAC, HEPA and ULPA clean rooms, vacuum cleaning, respirators, cement, metals, food, pharmaceuticals, processed fluids, and combustion processes.

The gas filter media may stand alone as a filter media; or in the alternative, it may be joined with (e.g., laminated to or bonded to) a support material, for example, a non-woven material or a fabric. Exemplary lamination or bonding techniques include such conventional methods as, but not limited to, adhesives, welding (heat/ultrasonics) and the like. Furthermore, the gas filter media may be flat or formed into pleats or shapes. There is a need to have a more dimensionally stable (or high temperature melt integrity) separator for larger cells, because if short-circuiting occurs, the rupture of the cell could be more significant because of the greater mass of lithium material contained in the larger cell. Thus, in accordance with at least certain embodiments, a battery separator is made from a nonwoven flat sheet material having high temperature melt integrity, a microporous membrane having low temperature shutdown properties, and an optional adhesive bonding the nonwoven flat sheet to the microporous membrane and being adapted for swelling when contacted by an electrolyte. The high temperature melt integrity separator may comprise a microporous membrane and a nonwoven flat sheet that are bonded together with or without an adhesive or polymer therebetween. Nonwoven flat sheet may refer to a plurality of fibers held together by various methods, e.g., thermal fusion, resin, solvent bonding, or mechanical interlocking of fibers, sometimes concurrently with their extrusion. Nonwoven flat sheet includes fibrous structures made by such processes as dry, wet, or air laying, needlepunching, spunbonding, or melt blowing processes, and hydroentanglement. The fibers may be directionally or randomly oriented. While nonwoven typically does not include paper, for this application, papers are included. The fibers may be made of thermoplastic polymers, cellulosic, and/or ceramics. Thermoplastic polymers include, but are not limited to, polystyrenes, polyvinyl chlorides, polyacrylics, polyacetals, polyamides, polycarbonates, polyesters, polyetherimides, polyimides, polyketones, polyphenylene ethers, polyphenylene sulfides, polysulfones. Cellulosics include, but are not limited to, cellulose (e.g., cotton or other naturally occurring sources), regenerated cellulose (e.g., rayon), and cellulose acetate (e.g., cellulose acetate and cellulose triacetate). Ceramics include, but are not limited to, glass of all types and alumina, silica, and zirconia compounds (e.g., aluminum silicate). Additionally, the nonwoven or the fibers of the nonwoven may be coated or surface treated to improve the functionality of the nonwoven. For example, the coating or surface treatment may be to improve the adhesiveness of the nonwoven or its fibers, to improve the high temperature melt integrity of the nonwoven, and/or to improve the wettability of the nonwoven. With regard to improving the high temperature melt integrity, the nonwoven and/or its fibers may be coated or surface treated with a ceramic material. Such ceramic materials include, but are not limited to, alumina, silica, and zirconia compounds, and combinations thereof.

Bonding of the microporous membrane to the nonwoven flat sheet should maintain a high discharge rate which may require that there will be free mobility of the ionic species of the electrolyte between the anode and the cathode. The mobility of the ionic species is typically measured as electrical resistance (ER) or MacMullen number (the ratio of electrical resistance of an electrolyte-saturated porous medium to the electrical resistance of an equivalent volume of electrolyte [See: U.S. Pat. No. 4,464,238]). Accordingly, there may be a need for adhering the sheet to the membrane with a material that does not decrease ion mobility (or increase the electrical resistance) across the separator.

The adhesive may be selected from, but is not limited to, polyvinylidene fluoride (PVDF); polyurethane; polyethylene oxide (PEO); polyacrylonitrile (PAN); polymethylacrylate (PMA); poly(methylmethacrylate) (PMMA); polyacrylamide; polyvinyl acetate; polyvinylpyrrolidone; polytetraethylene glycol diacrylate; copolymers of any the foregoing and combinations thereof. One criterion for comonomer selection is the comonomer's ability to modify the surface energy of the homopolymer. Surface energy impacts, at least: the solubility of the copolymer, thereby affecting coating the copolymer onto the membrane; the adhesion of the copolymer to the membrane, thereby affecting battery manufacture and subsequent performance; and the wettability of the coating, thereby affecting absorption of liquid electrolyte into the separator. Suitable comonomers include, but are not limited to, hexafluoropropylene, octofluoro-1-butene, octofluoroisobutene, and tetrafluoroethylene. The comonomer content preferably ranges from 3 to 20% by weight, and most preferably, 7 to 15%. Preferably, the adhesive or swellable polymer is a copolymer of polyvinylidene fluoride. Preferably, the PVDF copolymer is a copolymer of polyvinylidene fluoride and hexafluoropropylene (PVDF:HFP), and, most preferably, the PVDF:HFP ratio is 91:9. The PVDF copolymers are commercially available from Elf Atochem, Philadelphia, Pa., USA; Solvay SA, Brussels, Belgium; and Kureha Chemical Industries, LTD, Ibaraki, Japan. A preferred PVDF:HFP copolymer is KYNAR 2800 from Elf Atochem.

The wetting agent may be selected from materials that are compatible with (i.e., miscible with or will not phase separate from) the swellable polymer, that, in trace amounts (e.g., 10 20% of the swellable polymer), will not have a detrimental effect upon the battery chemistry (such as wetting agents that contain sulfones, sulphates, and nitrogen), and that are fluid at room temperature or have a Tg (glass transition temperature) <50° C. The wetting agent may be selected from, but is not limited to, phthalate-based esters, cyclic carbonates, polymeric carbonates, and mixtures thereof. Phthalate-based esters are selected from, but are not limited to, dibutyl phthalate (DBP). Cyclic carbonates are selected from ethylene carbonate (EC), propylene carbonate (PC), butylene carbonate (BC), and mixtures thereof. Polymeric carbonates are selected from, but are not limited to; polyvinylene carbonate, and linear propylene carbonates. A microporous battery separator may have two portions bonded together. Each portion may consist of a co-extruded or non-coextruded layer and may be made of the same or different materials. To obtain greater puncture strength, certain embodiments may bond together two portions that are sized, when combined, to have the desired total thickness of the separator. Selected embodiments may, preferably, be made by a collapsed bubble technique; i.e. a blown film technique in which a single molten polymer (or blend of polymers) is extruded through an annular die, the bubble which issues from the die has a first portion and a second portion (each portion representing roughly one-half of the circumference of the bubble), and then the bubble is collapsed onto itself and bonded prior to micropore formation (preferably by annealing and stretching). When the bubble issues from the die, it is substantially oriented in the machine direction. Thus, when the bubble is collapsed onto itself and bonded, the first portion and the second portion may be oriented in substantially the same direction (angular bias between oriented portions being less than 15°). Collapsing and bonding are performed in the same step by allowing the molten (or near molten) polymer of the bubble to knit together. By collapsing the bubble onto itself and bonding same, increased puncture strength is obtained at thicknesses which may be equivalent to other separators. The first portion and the second portion, which when bonded provide the precursor for the micropore formation process (e.g. an anneal and stretch operation), may be made of materials such as polyolefins, preferably polyethylene or polypropylene, copolymers thereof, and mixtures thereof, and most preferably polyethylene and polypropylene.

A trilayer, shutdown battery separator may refer to a porous film for use in electrochemical cells, e.g., batteries, particularly secondary (or rechargeable) batteries, such as lithium batteries. This trilayer separator may have a polypropylene-polyethylene-polypropylene construction. The separator may have a thickness of less than 3 mils (about 75 microns). The separator's thickness preferably ranges between 0.5 mils (about 12 microns) and 1.5 mils (about 38 microns). Most preferably, the separator's thickness is about 1 mil (about 25 microns). Preferably, the separator has a permeability, as measured by JIS ***Gurley***, of less than 300 sec. Preferably, the separator has a puncture strength of at least 300 grams. Preferably, the separator has porosity in the range of 40% to 70%.One method of making the trilayer, shutdown battery separator generally comprises the steps of: extruding non-porous polypropylene precursors; extruding a non-porous polyethylene precursor; forming a non-porous trilayer precursor where the polyethylene precursor is sandwiched between the polypropylene precursors; bonding the trilayer precursor; annealing the trilayer precursor; and stretching the bonded and annealed, non-porous trilayer precursor to form the porous battery separator.

The membrane may be a microporous sheet made from a blend of at least two ultra high molecular weight polyolefins having differing molecular weights. In one embodiment, these ultra high molecular weight polyolefins may be ultra high molecular weight polyethylene (UHMWPE). Alternatively the membrane may be a blend of a first ultra high molecular weight polyethylene having a first molecular weight and a second ultra high molecular weight polyethylene having a second molecular weight, the first molecular weight and the second molecular weight being greater than 1 million and being different from one another. In another embodiment, the membrane may be a blend of a first ultra high molecular weight polyethylene having a first molecular weight, a second ultra high molecular weight polyethylene having a second molecular weight, the first molecular weight and the second molecular weight being greater than 1 million and being different from one another, and a third polyolefin having a third molecular weight, the third molecular weight being less than 1 million. The membrane may have an IV greater than or equal to 6.3 dl/g. In another embodiment, the membrane may have an IV greater than or equal to 7.7 dl/g. In at least selected embodiments, the invention is directed to biaxially oriented porous membranes, composites including biaxially oriented porous membranes, biaxially oriented microporous membranes, biaxially oriented macroporous membranes, battery separators, filtration media, humidity control media, flat sheet membranes, liquid retention media, and the like, related methods, methods of manufacture, methods of use, and the like.

A laminated material or fabric may incorporate a composite membrane made as disclosed herein and that is wind and liquid penetration resistant, moisture vapor transmissive and air permeable. The laminated fabric may also include one or more layers of textile base or shell fabric material that are laminated to the membrane by any suitable process. The shell fabric may be made from any suitable material that meets performance and other criteria established for a given application.

"Moisture vapor transmissive" is used to describe an article that permits the passage of water vapor through the article, such as the laminated fabric or composite membrane. The term "resistant to liquid penetration" is used to describe an article that is not "wet" or "wet out" by a challenge liquid, such as water, and prevents the penetration of liquid through the membrane under ambient conditions of relatively low pressure. The term "resistant to wind penetration" describes the ability of an article to prevent air penetration above more than about three (3) CFM per square foot at a pressure differential across the article of 0.5" of water.

By way of example, jackets, coats, or other garments or finished products incorporating the laminated fabric may permit moisture vapor transmission through the garment. Moisture vapor may result from perspiration of the user, and the garment or finished product preferably permits moisture vapor transmission at a rate sufficient for the user to remain dry and comfortable during use in typical conditions. The laminated fabric is also preferably resistant to liquid and wind penetration, while being air permeable.

Desirably an air-filter cartridge includes at least one pleated microporous membrane.

A selected microporous membrane is made by a dry-stretch process and has substantially round shaped pores and a ratio of machine direction tensile strength to transverse direction tensile strength in the range of 0.5 to 5.0. The method of making the foregoing microporous membrane may include the steps of: extruding a polymer into a nonporous precursor, and biaxially stretching the nonporous precursor, the biaxial stretching including a machine direction stretching and a transverse direction stretching, the transverse direction including a simultaneous controlled machine direction relax.

Disclosed herein are biaxially oriented porous membranes, composites including biaxially oriented porous membranes, biaxially oriented microporous membranes, biaxially oriented macroporous membranes, battery separators, filtration media, humidity control media, flat sheet membranes, liquid retention media, and the like, related methods, methods of manufacture, methods of use, and the like.

For the use of the present invention, there is provided at least one of:
A membrane comprising:
at least one layer of porous polymer film made by a dry-stretch process including the steps of: extruding a polymer into at least a single layer nonporous precursor, and
biaxially stretching the nonporous precursor, the biaxial stretching including a machine direction stretching and a transverse direction stretching, the transverse direction
stretching including a simultaneous controlled machine direction relax,
and having substantially round shaped pores, a porosity of about 40% to 90%, a ratio of machine direction tensile strength to transverse direction tensile strength in the range of about 0.5 to 5.0, a Gurley of less than about 100, a mean flow pore diameter of at least about 0.04 microns, an Aquapore size of at least about 0.07 microns, and a hydro-head pressure greater than about 140 psi.

The above use, wherein the machine direction stretching of said biaxially stretching includes the step of transverse direction stretching with simultaneous machine direction stretching, and wherein said biaxially stretching further includes the step of transverse direction relax.

The above use, wherein said biaxially stretching of said nonporous precursor further includes an additional step of machine direction stretching.

The above use, wherein said dry-stretch process further includes the step of: machine direction stretching to form a porous intermediate prior to said biaxial stretching.

The above use, wherein said biaxially stretching of said nonporous precursor includes the machine direction stretching, an additional transverse direction stretching with simultaneous machine direction stretching, and a transverse direction relax.

The above use, wherein said dry-stretch process includes the steps of:
machine direction stretching followed by said biaxial stretching including said transverse direction stretching with simultaneous controlled machine direction relax, a second transverse direction stretching with simultaneous machine direction stretching, followed by transverse direction relax.

The above use, with said porous polymer film further having a thickness of at least about 8 microns, a transverse direction tensile strength of at least about 300 kgf/cm2, a standard deviation of mean flow pore diameter of less than about 0.025, a water intrusion pressure of at least about 80 psi, and a WVTR of at least about 8,000 g/m²-day.

The above use, with said porous polymer film further having a transverse direction shrinkage of less than about 1.0% at 90°C.

The above use, with said porous polymer film further having a transverse direction shrinkage of less than about 1.5% at 105°C.

The above use, with said porous polymer film further having a transverse direction shrinkage of less than about 3.0% at 120°C.

The above use, with said porous polymer film further having a machine direction shrinkage of less than about 10% at 90°C.

The above use, with said porous polymer film further having a machine direction shrinkage of less than about 20% at 105°C.

The above use, with said porous polymer film further having a machine direction shrinkage of less than about 30% at 120°C.

The above use, with said porous polymer film further having a thickness in a range of about 8 microns to 80 microns.

The above use, wherein said nonporous precursor is one of a blown film and a slot die film.

The above use, wherein said nonporous precursor is a single layer precursor formed by at least one of single layer extrusion and multilayer extrusion.

The above use, wherein said nonporous precursor is a multilayer precursor formed by at least one of coextrusion and lamination.

The above use, wherein said porous polymer film comprises one of polypropylene, polyethylene, blends thereof, and combinations thereof.

The above use, wherein said porous polymer film uses polyolefin resins which have a melt flow index (MFI) of about 0.01 to 10.0 and a polymer crystallinity of at least about 45%.

The above use, wherein said precursor is one of a single layer precursor and a multilayer precursor.

The above use, wherein said membrane further includes at least one nonwoven, woven, or knit layer bonded to at least one side of said porous polymer film.

The above use, wherein said membrane is made up of a plurality of said porous polymer films.

The above use, wherein said porous polymer film is made up of at least two layers.

The above use, wherein said membrane has substantially round shaped pores, a porosity of about 40% to 90%, a ratio of machine direction tensile strength to transverse direction tensile strength in the range of about 0.5 to 5.0, a Gurley of less than about 100, a mean flow pore diameter of at least about 0.04 microns, an Aquapore size of at least about 0.07 microns, and a hydro-head pressure greater than about 140 psi.

The above use, wherein said polymer being a semi-crystalline polymer.

The above use, wherein said polymer being selected from the group consisting of polyolefins, fluorocarbons, polyamides, polyesters, polyacetals (or polyoxymethylenes), polysulfides, polyphenyl sulfide, polyvinyl alcohols, co-polymers thereof, blends thereof, and combinations thereof.

The above use, with said porous polymer film further having a porosity of about 65% to 90%, a ratio of machine direction tensile strength to transverse direction tensile strength in the range of about 1.0 to 5.0, a Gurley of less than about 20, a mean flow pore diameter of at least about 0.05 microns, an Aquapore size of at least about 0.08 microns, and a hydro-head pressure greater than about 145 psi.

The above use, wherein said substantially round shaped pores have at least one of an aspect ratio in the range of about 0.75 to 1.25 and a sphericity factor in the range of about 0.25 to 8.0.

## Claims

1. Use of a porous membrane in humidity control, selective passage of humidity, and/or blockage of liquid water, the porous membrane comprising:
at least one layer of porous polymer film made by a dry-stretch process including the steps of:
extruding a polymer into at least a single layer nonporous precursor, and
biaxially stretching the nonporous precursor, the biaxial stretching including a machine direction stretching and a transverse direction stretching, the transverse direction stretching including a simultaneous controlled machine direction relax,
and **characterised by** the porous membrane having substantially round shaped pores, the pores having a sphericity factor in the range of 0.25 to 8.0, a porosity of 40% to 90%, a ratio of machine direction tensile strength to transverse direction tensile strength in the range of 0.5 to 5.0, a JIS Gurley permeability of less than 100 seconds, a mean flow pore diameter of at least 0.04 microns, an Aquapore size of at least 0.07 microns, and a hydro-head pressure greater than 140 psi.

2. Use according to claim 1, wherein the machine direction stretching of said biaxially stretching includes the step of transverse direction stretching with simultaneous machine direction stretching, and wherein said biaxially stretching further includes the step of transverse direction relax.

3. Use according to claim 2, wherein said biaxially stretching of said nonporous precursor further includes an additional step of machine direction stretching.

4. Use according to claim 1, wherein said dry-stretch process optionally includes or further includes:
the steps of:
machine direction stretching followed by said biaxial stretching including said transverse direction stretching with simultaneous controlled machine direction relax, a second transverse direction stretching with simultaneous machine direction stretching, followed by transverse direction relax; or
the step of:
machine direction stretching to form a porous intermediate prior to said biaxial stretching.

5. Use according to claim 1, wherein said biaxially stretching of said nonporous precursor optionally includes at least one of:
the machine direction stretching including an additional transverse direction stretching with simultaneous machine direction stretching, and a transverse direction relax; or
the simultaneous biaxial stretching of a plurality of separate, superimposed, layers or plies of nonporous precursor, wherein at least one of: none of the plies are bonded together during the stretching process, and all of the plies are bonded together during the stretching process.

6. Use according to claim 1, with said porous polymer film optionally having or further having at least one of: a thickness of at least 8 microns, a transverse direction tensile strength of at least 300 kgf/cm2, a standard deviation of mean flow pore diameter of less than 0.025, a water intrusion pressure of at least 80 psi, and a WVTR of at least 8,000 g/m2-day;
a transverse direction shrinkage of at least one of: less than 1.0 at 90°C, less than 1.5 at 105°C, and less than 3.0 at 120°C;
a thickness in a range of 8 microns to 80 microns; or
a porosity of 65% to 90%, a ratio of machine direction tensile strength to transverse direction tensile strength in a range of 1.0 to 5.0, a JIS Gurley permeability of less than 20 seconds, a mean flow pore diameter of at least 0.05 microns, an Aquapore size of at least 0.08 microns, and a hydro-head pressure greater than 145 psi.

7. Use according to claim 1, wherein said nonporous precursor is at least one of:
one of a blown film and a slot die film, a single layer precursor formed by at least one of single layer extrusion and multilayer extrusion, and a multilayer precursor formed by at least one of coextrusion and lamination.
one of a blown film and a slot die film, a single layer precursor formed by at least one of single layer extrusion and multilayer extrusion, and a multilayer precursor formed by at least one of coextrusion and lamination.

8. Use according to claim 1, wherein said membrane further includes at least one nonwoven, woven, or knit layer bonded to at least one side of said porous polymer film.

9. Use according to claim 1, wherein said polymer being selected from the group consisting of polyolefins, fluorocarbons, polyamides, polyesters, polyacetals, polyoxymethylenes, polysulfides, polyphenyl sulfide, polyvinyl alcohols, co-polymers thereof, blends thereof, and combinations thereof.

10. Use according to claim 1, wherein said substantially round shaped pores have at least one of an aspect ratio in the range of 0.75 to 1.25 and a sphericity factor in the range of 0.25 to 8.0.

## Patentansprüche

1. Anwendung einer porösen Membran bei einer Feuchtigkeitssteuerung, einer selektiven Durchlässigkeit von Feuchtigkeit und/oder einer Blockade von flüssigem Wasser, die Folgendes aufweist:
zumindest eine Schicht eines porösen Polymerfilms, der durch einen Trockenstreckprozess hergestellt ist, welcher folgende Schritte aufweist:
Extrudieren eines Polymers in zumindest einen einlagigen nicht porösen Präkursor, und
biaxiales Strecken des nicht porösen Präkursors, wobei das biaxiale Strecken ein Strecken in Maschinenrichtung bzw. Längsrichtung und ein Strecken in Querrichtung aufweist, wobei das Strecken in Querrichtung eine gleichzeitige gesteuerte Entspannung in Längsrichtung aufweist,
und **dadurch gekennzeichnet, dass** die porösen Membran im Wesentlichen rund geformte Poren hat, wobei die Poren einen Sphärizitäts- bzw. Kugelfaktor im Bereich von 0,25 bis 8,0 haben, weiter eine Porosität von 40 % bis 90 %, ein Verhältnis der Zugfestigkeit in Längsrichtung zur Zugfestigkeit in Querrichtung in einem Bereich von 0,5 bis 5,0, eine Permeabilität nach JIS Gurley von weniger als 100 Sekunden, einen mittleren Flussporendurchmesser von mindestens 0,04 µm, eine Aquapore-Größe von mindestens 0,07 µm und einen Wassersäulendruckwert von mehr als 140 psi.

2. Anwendung nach Anspruch 1, wobei die Streckung in Längsrichtung des biaxialen Streckvorgangs den Schritt einer Streckung in Querrichtung mit gleichzeitiger Streckung in Längsrichtung aufweist, und wobei das biaxiale Strecken weiter den Schritt einer Entspannung in Querrichtung aufweist.

3. Anwendung nach Anspruch 2, wobei das biaxiale Strecken des nicht porösen Präkursors weiter einen zusätzlichen Schritt einer Streckung in Längsrichtung aufweist.

4. Anwendung nach Anspruch 1, wobei der Trockenstreckprozess optional oder weiter Folgendes aufweist:
folgende Schritte:
eine Streckung in Längsrichtung gefolgt durch biaxiales Strecken, was eine Streckung in Querrichtung mit gleichzeitiger gesteuerter Entspannung in Längsrichtung, eine zweite Streckung in Querrichtung mit gleichzeitiger Streckung in Längsrichtung gefolgt durch eine Entspannung in Querrichtung aufweist; oder
folgenden Schritt:
eine Streckung in Längsrichtung, um ein poröses Zwischenprodukt vor der biaxialen Streckung zu formen.

5. Anwendung nach Anspruch 1, wobei das biaxiale Strecken des nicht porösen Präkursors optional zumindest eines von Folgendem aufweist:
wobei die Streckung in Längsrichtung, eine zusätzliche Streckung in Querrichtung mit gleichzeitiger Streckung in Längsrichtung und eine Entspannung in Querrichtung aufweist; oder
die gleichzeitige biaxiale Streckung einer Vielzahl von separaten, übereinanderliegenden Lagen oder Faltungen des nicht porösen Präkursors, wobei zumindest einer der folgenden Fälle vorliegt: keine der Faltungen bzw. Lagen sind während des Streckprozesses miteinander verbunden, und alle der Faltungen bzw. Lagen sind während des Streckprozesses miteinander verbunden.

6. Anwendung nach Anspruch 1, wobei der poröse Polymerfilm optional oder weiter zumindest eines der Folgenden aufweist: eine Dicke von mindestens 8 µm, eine Zugfestigkeit in Querrichtung von mindestens 300 kgF/cm², eine Standardabweichung des mittleren Flussporendurchmessers von weniger als 0,025, einen Wassereindringungsdruck von mindestens 80 psi und einen WVTR von mindestens 8000 g/m²-Tag;
eine Schrumpfung in Querrichtung von mindestens einem der Folgenden:
weniger als 1,0 bei 90 °C, weniger als 1,5 bei 105 °C und weniger als 3,0 bei 120 °C;
eine Dicke im Bereich von 8 µm bis 80 µm; oder
eine Porosität von 65 % bis 90 %, ein Verhältnis der Zugfestigkeit in Längsrichtung zur Zugfestigkeit in Querrichtung in einem Bereich von 1,0 bis 5,0, eine Permeabilität nach JIS Gurley von weniger als 20 Sekunden, einen mittleren Flussporendurchmesser von mindestens 0,05 µm, eine Aquapore-Größe von mindestens 0,08 µm und einen Wassersäulendruckwert von mehr als 145 psi.

7. Anwendung nach Anspruch 1, wobei der nicht poröse Präkursor zumindest eines der Folgenden ist:
eine Blasfolie oder eine Schlitzdüsenfolie, ein einlagiger Präkursor, der durch eine Einzellagenextrusion und/oder Mehrlagenextrusion geformt wird, und ein mehrlagiger Präkursor, der durch eine Coextrusion und/oder eine Laminierung geformt wird,
eine Blasfolie oder eine Schlitzdüsenfolie, ein einlagiger Präkursor, der durch eine einlagige Extrusion und/oder eine mehrlagige Extrusion geformt wird, und ein mehrlagiger Präkursor, der durch eine Coextrusion und/oder Laminierung geformt wird.

8. Anwendung nach Anspruch 1, wobei die Membran weiter zumindest eine nicht gewebte, gewebte oder gestrickte Lage aufweist, die mit mindestens einer Seite des porösen Polymerfilms verbunden ist.

9. Anwendung nach Anspruch 1, wobei das Polymer aus der Gruppe ausgewählt ist, die aus Polyolefinen, Fluorcarbonen, Polyamiden, Polyestern, Polyacetalen, Polyoxymethylenen, Polysulfiden, Polyphenylsulfid, Polyvinylalkoholen, Copolymeren davon und Mischungen davon und Kombinationen davon besteht.

10. Anwendung nach Anspruch 1, wobei die im Wesentlichen rund geformten Poren ein Seitenverhältnis im Bereich von 0,75 bis 1,25 und/oder einen Sphärizitäts- bzw. Kugelfaktor im Bereich von 0,25 bis 8,0 haben.

## Revendications

1. Utilisation d'une membrane poreuse dans un contrôle d'humidité, de passage sélectif d'humidité, et/ou de blocage d'eau liquide, la membrane poreuse comprenant :
au moins une couche de film polymère poreux fabriqué par un processus d'étirage à sec comprenant les étapes suivantes :
extruder un polymère pour obtenir au moins un précurseur non poreux à une seule couche, et
étirer de façon bi-axiale le précurseur non poreux, l'étirement bi-axial comprenant un étirement dans la direction de la machine et un étirement dans la direction transversale, l'étirement dans la direction transversale comprenant un relâchement simultané contrôlé dans la direction de la machine,
et **caractérisée en ce que** la membrane poreuse a des pores de forme sensiblement ronde, les pores ayant un facteur de sphéricité compris entre 0,25 et 8,0, une porosité de 40 % à 90 %, un rapport entre la résistance à la traction dans la direction de la machine et la résistance à la traction dans la direction transversale compris entre 0,5 et 5,0, une perméabilité JIS Gurley inférieure à 100 secondes, un diamètre de pore de flux moyen d'au moins 0,04 micromètres, une taille d'Aquapore d'au moins 0,07 micromètres, et une pression de hauteur hydraulique supérieure à 140 psi.

2. Utilisation selon la revendication 1, dans laquelle l'étirement dans la direction de la machine de l'étirement bi-axial comprend l'étape consistant à étirer dans la direction transversale avec un étirement simultané dans la direction de la machine, et dans laquelle l'étirement bi-axial comprend en outre une étape de relâchement dans la direction transversale.

3. Utilisation selon la revendication 2, dans laquelle l'étirement bi-axial du précurseur non poreux comprend en outre une étape additionnelle d'étirement dans la direction de la machine.

4. Utilisation selon la revendication 1, dans laquelle le processus d'étirage à sec comprend optionnellement ou comprend en outre :
les étapes suivantes :
un étirement dans la direction de la machine suivi de l'étirement bi-axial comprenant l'étirement dans la direction transversale avec un relâchement simultané contrôlé dans la direction de la machine, un deuxième étirement dans la direction transversale avec un étirement simultané dans la direction de la machine, suivi d'un relâchement dans la direction transversale ; ou
l'étape suivante :
un étirement dans la direction de la machine pour former un intermédiaire poreux avant l'étirement bi-axial.

5. Utilisation selon la revendication 1, dans laquelle l'étirement bi-axial du précurseur non poreux comprend option¬inellement au moins l'une des étapes suivantes :
l'étirement dans la direction de la machine comprenant un étirement additionnel dans la direction transversale avec un étirement simultané dans la direction de la machine, et un relâchement dans la direction transversale ; ou
l'étirement bi-axial simultané d'une pluralité de couches ou d'épaisseurs séparées superposées de précurseur non poreux, dans lequel au moins l'une des actions suivantes est réalisée : aucune des épaisseurs n'est liée ensemble pendant le processus d'étirement, et toutes les épaisseurs sont liées ensemble pendant le processus d'étirement.

6. Utilisation selon la revendication 1, le film polymère poreux ayant optionnellement ou ayant en outre au moins l'une des caractéristiques suivantes : une épaisseur d'au moins 8 micromètres, une résistance à la traction dans la direction transversale d'au moins 300 kgf/cm2, un écart type du diamètre de pore de flux moyen inférieur à 0,025, une pression d'intrusion d'eau d'au moins 80 psi, et un WVTR d'au moins 8000 g/m2-jour ;
un rétrécissement dans la direction transversale d'au moins l'une des caractéristiques suivantes : inférieur à 1,0 à 90 °C, inférieur à 1,5 à 105 °C, et inférieur à 3,0 à 120 °C ;
une épaisseur comprise entre 8 micromètres et 80 micromètres, ou
une porosité de 65 % à 90 %, un rapport entre la résistance à la traction dans la direction de la machine et la résistance à la traction dans la direction transversale compris entre 1,0 et 5,0, une perméabilité JIS Gurley inférieure à 20 secondes, un diamètre de pore de flux moyen d'au moins 0,05 micromètres, une taille d'Aquapore d'au moins 0,08 micromètres, et une pression de hauteur hydraulique supérieure à 145 psi.

7. Utilisation selon la revendication 1, dans laquelle le précurseur non poreux est au moins l'un de :
l'un d'un film soufflé et d'un film de filière à fente, un précurseur à une seule couche formé par au moins l'une d'une extrusion à une seule couche et d'une extrusion multicouche, et un précurseur multicouche formé par au moins l'une d'une coextrusion et d'une stratification ;
l'un d'un film soufflé et d'un film de filière à fente, un précurseur à une seule couche formé par au moins l'une d'une extrusion à une seule couche et d'une extrusion multicouche, et un précurseur multicouche formé par au moins l'une d'une coextrusion et d'une stratification.

8. Utilisation selon la revendication 1, dans laquelle la membrane comprend en outre au moins une couche non tissée, tissée, ou tricotée, reliée à au moins un côté du film polymère poreux.

9. Utilisation selon la revendication 1, dans laquelle le polymère est sélectionné dans le groupe constitué des poly¬oléfines, des fluorocarbones, des polyamides, des polyesters, des polyacétals, des polyoxyméthylènes, des polysulfures, du sulfure de polyphénylène, des alcools polyvinyliques, de leurs co¬polymères, leurs mélanges et leurs combinaisons.

10. Utilisation selon la revendication 1, dans laquelle les pores de forme sensiblement ronde ont au moins l'un d'un facteur de forme compris entre 0,75 et 1,25 et d'un facteur de sphéricité compris entre 0,25 et 8,0.
